(19) Europäisches Patentamt
European Patent Office
Office européen des brevets

(11) **EP 2 592 831 A2**

(12) **EUROPEAN PATENT APPLICATION**
published in accordance with Art. 153(4) EPC

(43) Date of publication:
**15.05.2013 Bulletin 2013/20**

(51) Int Cl.:
*H04N 7/26* (2006.01)   *H04N 7/32* (2006.01)

(21) Application number: **11803807.4**

(86) International application number:
**PCT/KR2011/004970**

(22) Date of filing: **07.07.2011**

(87) International publication number:
**WO 2012/005521 (12.01.2012 Gazette 2012/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.07.2010 US 362789 P**

(71) Applicant: **Samsung Electronics Co., Ltd Gyeonggi-do 443-742 (KR)**

(72) Inventors:
• **LEE, Bae-Keun**
**Bucheon-si**
**Gyeonggi-do 420-120 (KR)**

• **SOHN, Yu-Mi**
**Seoul 135-271 (KR)**
• **LEE, Kyo-Hyuk**
**Yongin-si**
**Gyeonggi-do 448-536 (KR)**

(74) Representative: **Fearnside, Andrew Simon**
**Appleyard Lees**
**15 Clare Road**
**Halifax, HX1 2HY (GB)**

(54) **METHOD AND APPARATUS FOR ENCODING VIDEO USING ADJUSTABLE LOOP FILTERING, AND METHOD AND APPARATUS FOR DECODING VIDEO USING ADJUSTABLE LOOP FILTERING**

(57)    Provided is a method of decoding a video by using a video decoding processor, the method including: extracting encoding information and encoded video data by receiving and parsing a bit stream of a video; decoding the encoded video data for each coding unit which is a data unit for decoding the video data, by using the encoding information; performing loop filtering on the coding unit with respect to the decoded video data by using internal pixels of the coding unit based on a minimum distance between a pixel on which loop filtering is to be performed and a border of the coding unit; and restoring the video by combining the decoded video data and data on which the loop filtering is performed, for each coding unit.

FIG. 2

EP 2 592 831 A2

**Description**

[Technical Field]

The present invention relates to a method and apparatus for encoding a video, and a method and apparatus for decoding a video.

[Background Art]

Due to development and supply of hardware capable of reproducing and storing video contents having a high resolution or a high image quality, the need for a video codec for effectively encoding or decoding the video contents having a high resolution or a high image quality is increasing. According to a conventional video codec, a video is encoded according to a limited encoding method based on a macroblock of a predetermined size. Also, a conventional video codec performs transformation and inverse transformation on macro-blocks by using blocks having the same sizes to encode or decode video data.

[Disclosure]

[Technical Solution]

According to an aspect of the present invention, there is provided a method of decoding a video by using a video decoding processor, the method comprising: extracting encoding information and encoded video data by receiving and parsing a bit stream of a video; decoding the encoded video data for each coding unit which is a data unit for decoding the video data, by using the encoding information; performing loop filtering on the coding unit with respect to the decoded video data by using internal pixels of the coding unit based on a minimum distance between a pixel on which loop filtering is to be performed and a border of the coding unit; and restoring the video by combining the decoded video data and data on which the loop filtering is performed, for each coding unit.

[Description of Drawings]

The above and other features and advantages of the present invention will become more apparent by describing in detail exemplary embodiments thereof with reference to the attached drawings in which:

FIG. 1 is a block diagram illustrating a video encoding apparatus using loop filtering according to an embodiment of the present invention;
FIG. 2 is a block diagram illustrating a video decoding apparatus using loop filtering according to an embodiment of the present invention;
FIG. 3 illustrates a filtering area of loop filtering for a 64x64 block;
FIG. 4 illustrates a loop filtering area determined according to an embodiment of the present invention;
FIG. 5 illustrates a line memory area used for deblocking filtering and loop filtering for a current coding unit, according to an embodiment of the present invention;
FIG. 6 illustrates a method of determining a loop filter according to an embodiment of the present invention;
FIGS. 7 and 8 are flowcharts of a method of performing deblocking filtering and loop filtering with respect to a current coding unit according to a relationship between deblocking filtering and loop filtering according to an embodiment of the present invention;
FIGS. 9 and 10 illustrate a loop filtering area determined according to another embodiment of the present invention and a loop filtering area with respect to a current coding unit;
FIG. 11 is a flowchart illustrating a video encoding method using loop filtering according to an embodiment of the present invention;
FIG. 12 is a flowchart illustrating a video decoding method using loop filtering according to an embodiment of the present invention;
FIG. 13 is a diagram for describing a concept of coding units according to an embodiment of the present invention;
FIG. 14 is a block diagram of an image encoder based on coding units according to an embodiment of the present invention;
FIG. 15 is a block diagram of an image decoder based on coding units according to an embodiment of the present invention;
FIG. 16 is a diagram illustrating deeper coding units according to depths, and partitions according to an embodiment of the present invention;

FIG. 17 is a diagram for describing a relationship between a coding unit and transformation units, according to an embodiment of the present invention;

FIG. 18 is a diagram for describing encoding information of coding units corresponding to a coded depth, according to an embodiment of the present invention;

FIG. 19 is a diagram of deeper coding units according to depths, according to an embodiment of the present invention;

FIGS. 20 through 22 are diagrams for describing a relationship between coding units, prediction units, and transformation units, according to an embodiment of the present invention; and

FIG. 23 is a diagram for describing a relationship between a coding unit, a prediction unit or a partition, and a transformation unit, according to encoding mode information of Taple 1.

[Best Mode]

According to an aspect of the present invention, there is provided a method of of decoding a video by using a video decoding processor, the method comprising: extracting encoding information and encoded video data by receiving and parsing a bit stream of a video; decoding the encoded video data for each coding unit which is a data unit for decoding the video data, by using the encoding information; performing loop filtering on the coding unit with respect to the decoded video data by using internal pixels of the coding unit based on a minimum distance between a pixel on which loop filtering is to be performed and a border of the coding unit; and restoring the video by combining the decoded video data and data on which the loop filtering is performed, for each coding unit.

The performing of loop filtering may comprise: modifying a loop filtering method based on a minimum distance between the pixel and a border of the coding unit, and a filter length of the loop filter; and performing loop filtering on the coding unit based on the modified loop filtering method, wherein the loop filtering method comprises at least one of a first method of determining a loop filtering area including central pixels of loop filtering within an internal area away from at least one border of the coding unit a predetermined distance and a second methed of determining the loop filter such that a filter length of the loop filter is equal to or smaller than the minimum distance between the pixel and the border of the coding unit.

The performing of loop filtering may comprise determining a loop filtering area including central pixels of loop filtering within an internal area away from at least one border of the coding unit a predetermined distance. The predetermined distance between the at least one border of the coding unit and the internal area may be equal to or greater than the filter length.

The loop filtering method may comprise determining the loop filter such that a filter length of the loop filter is equal to or smaller than the minimum distance between the pixel and the border of the coding unit; and performing loop filtering on the coding unit by using the determined loop filter.

According to another aspect of the present invention, there is provided a method of encoding a video by using a video encoding processor, the method comprising: encoding the video data based on a coding unit obtained by splitting a video data into spatial domains; performing loop filtering on the coding unit by using internal pixels of the coding unit based on a minimum distance between a pixel, on which loop filtering is to be performed, from among video data of the coding unit, and a border of the coding unit, and a filter length of the loop filter; and outputting encoding information related to an encoding method based on the coding unit and the encoded video data for each of the coding units.

The performing of loop filtering may comprise: modifying the loop filtering method based on a minimum distance between the pixel and a border of the coding unit and a filter length of the loop filter; and performing loop filtering on the coding unit based on the modified loop filtering method, wherein the loop filtering method comprises at least one of a first method of determining a loop filtering area including central pixels for loop filtering within an internal area that is away from at least one border of the coding unit a predetermined distance and a second methed of determining the loop filter such that a filter length of the loop filter is equal to or smaller than the minimum distance between the pixel and the border of the coding unit.

According to another aspect of the present invention, there is provided a video decoding apparatus in connection with a video decoding processor, comprising: a receiving unit to receive and parse a bit stream of a video so as to extract encoding information and encoded video data; an adaptive loop filter (ALF) coding unit to decode the encoded video data for each coding unit which is a data unit for decoding the video data by using the encoding information, and to perform loop filtering on the coding unit by using internal pixel values of the coding unit based on a minimum distance between a pixel on which loop filtering is to be performed and a border of the coding unit, and a filter length of the loop filter; and a restoring unit to restore the video by combining the decoded video data and the data on which loop filtering is performed, for each of the coding units.

According to another aspect of the present invention, there is provided a video encoding apparatus in connection with a video encoding processor, comprising: an ALF coding unit to perform loop filtering on the coding unit by using internal pixel values of the coding unit based on a minimum distance between a pixel on which loop filtering is to be performed and a border of the coding unit, and a filter length of the loop filter, based on a coding unit that is obtained by splitting video data into spatial domains, and to encode the video data for each of the coding units; and an output unit to output encoding information related to an encoding method based on the coding unit and the encoded video data for each of the coding units.

According to another aspect of the present invention, there is provided a computer readable recording medium having recorded thereon a program for executing the decoding method using loop filtering described above.

According to another aspect of the present invention, there is provided a computer readable recording medium having recorded thereon a program for executing the encoding method using loop filtering described above.

[Mode for Invention]

Expressions such as "at least one of," when preceding a list of elements, modify the entire list of elements and do not modify the individual elements of the list.

In various embodiments of the present invention of the present specification, an "image" may be understood as an inclusive concept which refers to not only a still image but also a video. Also, in the various embodiments of the present invention of the present applicaton, a "data unit" refers to a set of data of a predetermined range from among data that constitutes a video.

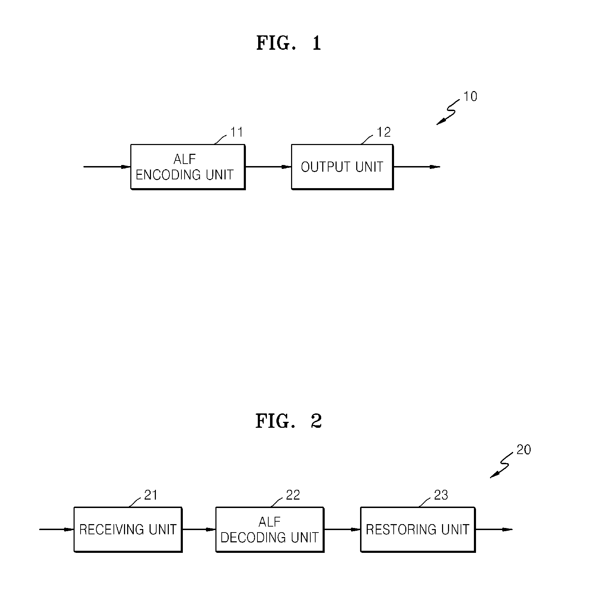

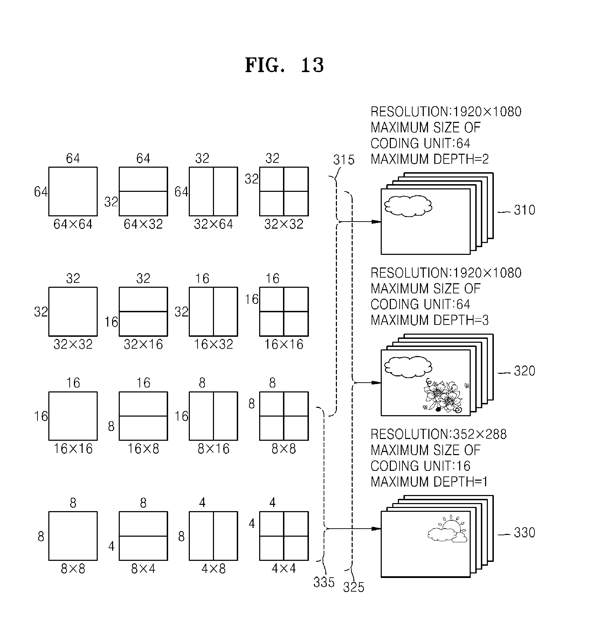

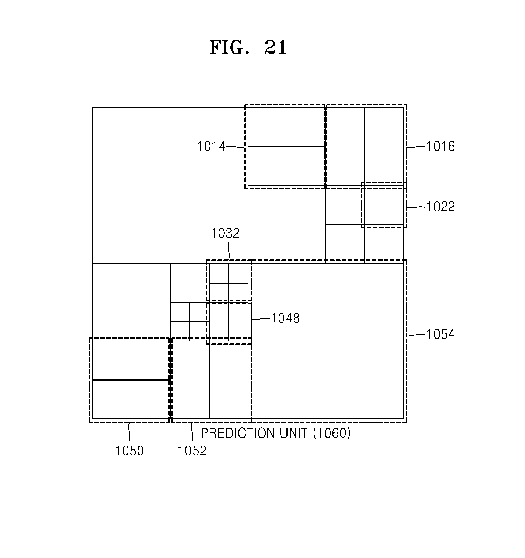

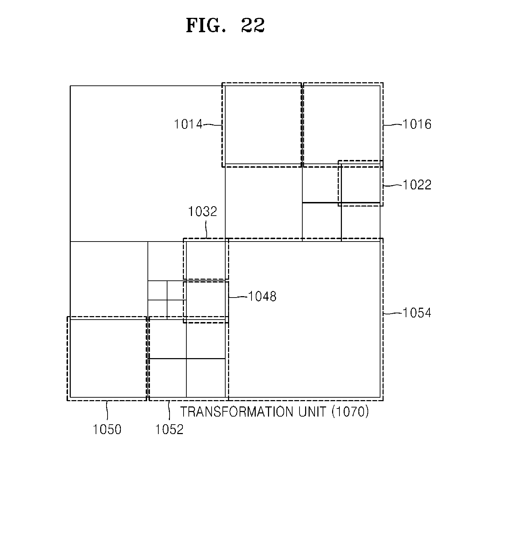

Hereinafter, encoding and decoding of a video using loop filtering according to an embodiment of the present invention will be described with reference to FIGS. 1 through 12. Also, encoding and decoding of a video based on a data unit such as a coding unit in accordance with a tree structure will be described with reference to FIGS. 13 through 23. To determine a data area in which the loop filtering described above with reference to FIGS. 1 through 12 is performed, the data unit to be described with reference to FIGS. 13 through 23 may be used.

FIG. 1 is a block diagram illustrating a video encoding apparatus 10 using loop filtering according to an embodiment of the present invention.

The video encoding apparatus 10 using loop filtering includes an adaptive loop filter (ALF) coding unit 11 and an output unit 12. For convenience of description, the video encoding apparatus 10 using loop filtering will be referred to as "video encoding apparatus 10 according to an embodiment."

The video encoding apparatus 10 according to an embodiment may be operated such that an internal video encoding processor mounted in the video encoding apparatus 10 is operated in connection with the ALF coding unit 11 and the output unit 12 or in connection with an external video processor so as to output a video encoding result, thereby performing video encoding including the loop filtering according to the current embodiment of the present invention. The function of the internal video encoding processor of the video encoding apparatus 10 may be implemented not only by including an additional processor but also by using a video encoding processing module included in the ALF coding unit 11, a central processing unit, or a graphic calculation unit to perform basic video encoding operations.

The ALF coding unit 11 according to an embodiment may encode an input video based on coding units which are obtained by splitting video data into spatial domains. The coding units according to an embodiment may include not only fixed macro-blocks but also coding units having a tree structure according to an embodiment of the present invention. The coding units having a tree structure will be described in detail below with reference to FIGS. 13 through 23.

The ALF coding unit 11 may perform loop filtering in order to reduce error caused by encoding. The ALF coding unit 11 may perform loop filtering based on coding units.

The ALF coding unit 11 may perform loop filtering with respect to video data of a spatial domain that is restored by performing inverse quantization, inverse transformation, and motion compensation to a quantized transformation coefficient that is generated by performing motion estimation, transformation, and quantization to video data of a spatial domain. The ALF coding unit 11 may encode video data that is filtered by loop filtering, by performing motion estimation, transformation, and quantization again. Also, the quantized transformation coefficient may be output after performing variable length coding thereto.

The ALF coding unit 11 may determine a loop filtering method according to an embodiment, based on a minimum distance between a pixel on which loop filtering is to be perofmred, from among video data of a coding unit, and a border of the coding unit. Alternatively, the loop filtering method may be determined based on a filter length of a loop filter.

Also, the ALF coding unit 11 may determine a loop filtering method according to an embodiment, based on a minimum distance between a pixel on which loop filtering is to be perofmred, from among video data of a coding unit, and a border of the coding unit, and based on a filter length for loop filtering.

The loop filtering method may include a method in which a pixel on which loop filtering is to be performed, that is, a loop filtering area including a central pixel of loop filtering is determined and a method whereby a loop filter type is determined.

In an operation of performing filtering to a pixel within a current coding unit, neighbor pixels may be used or referred to depending on a filter type. If a neighbor pixel is stored in a different data storage space from a data storage space in which data that is currently encoded is stored, an operation delay may be generated to import data or an operation load may increase.

The ALF coding unit 11 may determine at least one of a loop filtering area and a loop filter such that an operation delay or an operation load caused while using a neighbor pixel may be minimized.

A position of a neighbor pixel used for filtering of a pixel in a current coding unit may be determined according to a filter length of a loop filter. For example, if a filter length of a loop filter is long, a neighbor pixel used for filtering of a pixel in a current coding unit may be located outside the current coding unit. While filtering regarding a pixel within a current coding unit is performed, if a neighbor pixel used in filtering is located outside the current coding unit, a filtering operation is likely to be delayed or an operation load is likely to increase.

Accordingly, the ALF coding unit 11 may determine a loop filtering method such that a pixel within a coding unit may be used in loop filtering with respect to a pixel of a current coding unit. The ALF coding unit 11 may determine a loop filtering method based on a distance between a pixel on which loop filtering is to be performed, from among video data of a coding unit, and a nearest border from among borders of the coding unit, that is, a minimum distance, and based on a filterg length of a loop filter.

For example, the ALF coding unit 11 may determine a loop filtering method based on a distance between a pixel on which loop filtering is to be performed, from among video data of a coding unit, and closet borders from among upper and lower borders of the coding unit, that is, a minimum vertical distance, and based on a filter vertical length for filtering of a loop filter. The filter vertical length of a loop filter may denote the number of filter coefficients of the longest axis from among vertical filter coefficients of a loop filter that is to be applied to a current filtering area.

Similarly, the ALF coding unit 11 may also determine a loop filtering method based on a distance between a pixel on which loop filtering is to be performed, from among video data of a coding unit, and closet borders from among left and right borders of the coding unit, that is, a minimum horizontal distance, and based on a filter horizontal length for filtering of a loop filter. The filter horizontal length of a loop filter may denote the number of filter coefficients of the longest axis from among horizontal filter coefficients of a loop filter that is to be applied to a current filtering area.

To determine a loop filter according to an embodiment, a loop filter type, a filter length of a loop filter, and the like may be adjusted. A filter horizontal length and a filter vertical length of a loop filter may be individually determined. The filter vertical length of a loop filter may be determined to be shorter than the filter horizontal length. This is because when external data of a coding unit is used in vertical loop filtering with respect to a coding unit, an operation delay or an operation load increases significantly.

The ALF coding unit 11 may determine a loop filtering area within an internal area that is away from at least one border of a coding unit a predetermined distance based on the minimum distance between a pixel to be filtered and a border of a coding unit and on a filter length of a loop filter. For example, the predetermined distance from the at least one border of a coding unit to the internal area may be determined to be equal to or greater than the filter length of the loop filter.

A loop filtering area according to an embodiment of the present invention may be determined to be an area including pixels to be filtered by loop filtering.

A filtering area of loop filtering according to an embodiment of the present invention may include at least one of a first internal area separated from borders of a coding unit a predetermined distance, a second internal area separated from upper and lower borders of a coding unit a predetermined distance, and a third internal area separated from a lower border of a coding unit a predetermined distance.

Selectively, a filtering area of loop filtering may further include a fourth internal area that is separated from at least one of an upper border and a lower border of a coding unit a first distance and that is separated from at least one of a left border and a right border of the coding unit a second distance.

The ALF coding unit 11 may determine a loop filter such that a filter length of the loop filter is smaller than or equal to a minimum distance between a pixel to be filtered and a border of a coding unit.

The ALF coding unit 11 may determine a loop filtering area based on a minimum distance between a pixel to be filtered and a border of a coding unit, and determine a filter length of a loop filter based on a minimum distance between pixels of the determined loop filtering area and a border of a coding unit.

For example, the ALF coding unit 11 may determine a loop filtering area based on a minimum vertical distance between a current filter and an upper or lower border of a current coding unit, and determine a filter vertical length of a loop filter based on the minimum vertical distance between pixels of the loop filtering area and an upper border or a lower border of a coding unit.

The ALF coding unit 11 may determine a loop filter based on a minimum distance between a pixel to be filtered and a border of a coding unit, and determine a loop filtering area within an internal area that is separated from at least one border of a coding unit the previously determined filter length of a loop filter.

For example, the ALF coding unit 11 may determine a filter vertical length of a loop filter based on a minimum vertical distance between a pixel of a current coding unit and an upper border or a lower border of the current enoding unit, and determine a loop filtering area within an internal area that is away from at least one boarder of a coding unit the vertical filter length of the loop filter.

The ALF coding unit 11 may perform loop filtering to a current coding unit by using the loop filtering area and the loop filter that are determined based on the minimum distance between the pixel to be filtered and the border of the coding unit.

By associating deblocking filtering and loop filtering with each other, the ALF coding unit 11 may determine a loop filtering method in consideration of a deblocking filtering area. The ALF coding unit 11 may determine a loop filtering method for a current coding unit in consideration of a deblocking filtering area in which data is to be modified by prospective deblocking filtering, from among pixels of a current coding unit.

The ALF coding unit 11 according to an embodiment of the present invention may determine a filtering area or a loop filter such that deblocking filtering and loop filtering are not repeatedly performed on pixels of a current coding unit. Accordingly, the ALF coding unit 11 may determine a filtering area or a loop filter based on a minimum distance between a pixel in a current coding unit and a border of a coding unit, a filter length of a loop filter, and a height of a deblocking filtering area. A deblocking filtering area refers to an area of pixels in which data is modified by prospective deblocking filtering from among internal pixels of the current coding unit.

For example, the ALF coding unit 11 may determine a loop filtering area based on a minium distance between a pixel in a current coding unit and upper and lower borders of a coding unit, a filter vertical length of a loop filter, and a height of a deblocking filtering area. Also, the ALF coding unit 11 may determine a filter vertical length of a loop filter based on the minimum distance between a pixel in a current coding unit and upper and lower borders of a coding unit and a height of a deblocking filtering area.

For example, the ALF coding unit 11 may determine a loop filtering area from among areas except the deblocking filtering area in which data is modified by deblocking filtering within a current coding unit.

Also, the ALF coding unit 11 may determine a filtering area or a filter length of a loop filter such that external pixels of the current coding unit may be used if an operation delay or an operation load does not increase even when external pixels outside borders of a coding unit are used for filtering of a pixel within the current coding unit.

For example, loop filtering may be performed by using accessible pixels for deblocking filtering with respect to a predetermined pixel unit, from among pixels outside the upper or lower border of the current coding unit. Accordingly, the ALD coding unit 11 may extend at least one of the loop filtering area and the fitler vertical length of the determined loop filter and determine the same based on the number of neighbor pixels used for deblocking filtering with respect to a current coding unit in a vertical direction.

The number of neighbor pixels used for deblocking filtering with respect to a current coding unit in a vertical direction is determined based on a vertical length of a deblocking filter, and accordingly, at least one of the loop filtering area and the fitler vertical length of the determined loop filter may be extended based on a vertical length of a deblocking filter.

The ALF coding unit 11 may determine a loop filter within a current coding unit. Alternatively, the ALF coding unit 11 may determine a loop filter with respect to a pixel based on pixel positions in a coding unit. The pixel positions may be classified based on a distance between a pixel and a predetermined border of a coding unit. For example, a filter vertical length may be determined to be smaller as the minimum distance between a current pixel and the upper and lower borders of a coding unit narrows, and to be greater as the minimum distance becomes distant. Alternatively, the ALF coding unit 11 may determine at least two loop filters within a predetermined data unit in order to adjust a bandwith for data transmission needed for loop filtering. The ALF coding unit 11 may determine at least two loop filters for each coding unit. Also, the ALF coding unit 11 may determine at least two loop filters in consideration of the overall characteristics of a frame comprising the current coding unit.

A loop filter type or a filter length of a loop filter may be modified according to the determined loop filter. For example, a loop filter type such as a forward filter, a diamond type filter, a polygonal filter, or a one-dimensional filter may be selected, or a filter length of a loop filter such as a 9-tap, 7-tap, 5-tap, or 3-tap filter may be selected.

The ALF coding unit 11 may determine at least two loop filters such that loop filters which differ in regard to at least one of a loop filter type and a filter length are combined for each of predetermined data units.

The ALF coding unit 11 may determine a plurality of loop filters which are different only in terms of filter type, for loop filtering for a current data unit. For example, a square filter and a diamond-shaped filter may be selected as loop filters for a current data unit, or three types of loop filters, that is, a diamond-shaped filter, a polygonal filter, and a one-dimensoinal filter may be used at the same time.

Also, the ALF coding unit 11 may determine a plurality of loop filters which are different only in terms of a filter length of a loop filter, for loop filtering for a current data unit. For example, a 3-tap loop filter and a 7-tap loop filter may be determined to be selectively used according to a border area or an internal area of a data unit. Alternatively, three types of loop filters may be determined to be used at the same time such that 3-tap and 5-tap loop filters may be selectively used according to border directions within a border area, and a 9-tap loop filter may be used in an internal area.

Also, the ALF coding unit 11 may determine a plurality of loop filters which are different both in terms of loop filter type and filter length, for loop filtering on a current data unit. For example, as loop filters for a current data unit, a 5-tap loop filter may be used in an internal area of a coding unit, and for a border area, two types of loop filters may be determined to be used, that is, diamond-shaped loop filters, one having a filter vertical length of 7-tap and the other having a filter horizontal length of 9-tap may be determined to be used.

Similarly to the above-described loop filter determining method, when the ALF coding unit 11 determines a plurality of loop filters for loop filtering with respect to a current data unit, different loop filters may be determined according to positions of filtering areas.

An output unit 12 according to an embodiment of the present invention outputs video data encoded for each coding unit and encoding information related to an encoding method based on the coding unit. The encoding information may include encoding mode information needed in decoding the encoded video data based on the coding unit. Bit streams of the encoded video data and the encoding information may be included in at least one bit stream and be output.

The output unit 12 according to an embodiment of the present invention may transmit filter coefficients for loop filtering as encoding information. Also, the output unit 12 may transmit encoding information regarding a loop filtering method for signaling whether loop filtering is allowed, whether modification of a loop filtering area is allowed, whether modification of a loop filter is allowed, whether modification of the loop filtering method is allowed, or whether loop filtering may be overlapped with deblocking filtering.

If the video encoding apparatus 10 encodes data based on coding units having a tree structure according to an embodiment of the present invention, the ALF coding unit 11 may split a picture to a maximum coding unit which is a data unit of the largest size for encoding, and determine coding units having a tree structure including the maximum coding unit, and output video data that is encoded for each coding unit.

The ALF coding unit 11 may perform loop filtering on a predetermined coding unit included in the coding units having a tree structure. For example, loop filtering may be performed on the maximum coding unit. Alternatively, loop filtering may be performed on coding units having a size qual to or greater than a predetermined size from among coding units having a tree structure.

If the video encoding apparatus 10 encodes data based on coding units having a tree structure according to an embodiment of the present invention, the output unit 12 may output, together with data encoded for each coding unit, information about a maximum size of a coding unit, information about variable depth range, structure information needed to determine coding units having a tree structure, encoding information about an encoding mode for decoding encoded video data, and information about loop filtering.

FIG. 2 is a block diagram illustrating a video decoding apparatus 20 using loop filtering according to an embodiment of the present invention.

The the video decoding apparatus 20 according to an embodiment of the present invention using loop filtering includes a receiving unit 21, an ALF decoding unit 22, and a restoring unit 23. For convenience of description, the video decoding apparatus 20 using loop filtering will be referred to as a "video decoding apparatus 20 according to an embodiment."

To restore encoded video by decoding, the video decoding apparatus 20 according to an embodiment may perform a video decoding operation including loop filtering as a video decoding processor mounted in the video decoding apparatus 20 and the receiving unit 21, the ALF decoding unit 22, and the restoring unit 23 operate in connection with one another, or as an external video decoding processor and the three elements operate in connection with one another. The function of internal video decoding processor of the video decoding apparatus 20 may be implemented not only by including an additional video decoding processor but also by uysing a video decoding processing module included in the ALF decoding unit 22, a central processing unit or a graphic calculation device to perform basic video decoding operations.

The receiving unit 21 according to an embodiment of the present invention extracts decoding information including information about an encoding mode for decoding encoded video data and encoded video data, by receiving and parsing a bit stream of a video.

The video decoding apparatus 20 may receive a bit stream of encoded video based on coding units which are obtained by splitting video data to spatial domains. The coding units according to an embodiment may include not only fixed macro-blocks but also coding units having a tree structure which will be described later with reference to FIGS. 13 through 23.

When the video decoding apparatus 20 receives a bit stream of encoded video based on coding units having a tree structure, the receiving unit 21 may parse and extract from the bit stream the encoded video data and information about a maximum size of coding units, information about variable ranges of a depth, structure information for determining coding units having a tree structure, and encoding information about encoding modes for decoding encoded video based on the coding units having a tree structure.

The ALF decoding unit 22 according to an embodiment may receive the encoding information and the video data extracted by using the receiving unit 21, and may decode encoded video data for each coding unit by using the encoding information.

The ALF decoding unit 22 may perform variable length decoding, inverse quantization, inverse transformation, and motion compensation on the encoded video data by using an encoding mode read from the encoding information, thereby generating video data of a spatial domain. A quantized transformation coefficient is output by variable length decoding, and the quantized transformation coefficient may be output as motion data of an original video is restored through inverse quantization and inverse transformation. Motion data of an original video may be restored to video data of a spatial domain by motion compensation.

The restoring unit 23 may restore pictures by combining decoded video data of a spatial domain to restore a video.

The ALF decoding unit 22 according to an embodiment may perform loop filtering on decoded video data of a spatial domain in order to reduce error caused by encoding and decoding. The ALF decoding unit 22 may perform loop filtering based on coding units of decoded video data.

The ALF decoding unit 22 according to an embodiment may determine a loop filtering method such that pixel values in a coding unit are used based on a minimum distance between a pixe on which loop filtering is to be performed and a border of a coding unit and based on a filter length of a loop filter.

For example, the ALF decoding unit 22 may determine a loop filtering method based on a minimum distance between a pixel on which loop filtering is to be performed and upper and lower borders of a coding unit and a filter vertical length of a loop filter. Similarly, the ALF decoding unit 22 may determine a loop filtering method based on a minimum distance between a pixel on which loop filtering is to be performed and left and right borders of a coding unit and a filter horizontal length of a loop filter.

As the loop filtering method, a loop filtering area and a loop filter may be determined. The ALF decoding unit 22 according to an embodiment may perform loop filtering on a coding unit by using the loop filtering area or the loop filter determined based on a minimum distance between a pixel on which loop filtering is to be performed and a border of a coding unit, and based on a filter length of a loop filter.

The ALF decoding unit 22 may determine a loop filteing area within an internal area that is away from at least one border of a coding unit a predetermined distance, based on a minimum distance between a pixel on which loop filtering is to be performed and a border of a coding unit.

For example, the ALF decoding unit 22 may determine a loop filtering area within an internal area away from at least one border of a coding unit a predetermined distance based on a minimum distance between a pixel and an upper border or a lower border of a coding unit and a filter vertical length. The predetermined distance between at least one border of a coding unit and an internal area of the coding unit may be equal to or greater than a filter vertical length.

The loop filtering area determined according to an embodiment may include at least one of a first internal area separated from borders of a coding unit a predetermined distance, a second internal area separated from upper and lower borders of a coding unit a predetermined distance, and a third internal area separated from a lower border of a coding unit a predetermined distance.

Also, the ALF decoding unit 22 may determine a loop filter such that a filter length for loop filtering is equal to or smaller than a minimum distance between a pixel and a border of a coding unit. For example, the ALF decoding unit 22 may determine a loop filter such that a filter vertical length for vertical filtering of a loop filter is equal to or smaller than a minimum vertical distance between a pixel in a coding unit and upper and lower borders of a coding unit.

Also, a filter vertical length of a loop filter according to an embodiment may be determined to be smaller than a fitler horizontal length.

The ALF decoding unit 22 according to an embodiment may determine a loop filtering area based on a minimum distance between a pixel of a current coding unit and a border of a coding unit, and then determine a filter length of a loop filter based on a minimum distance between a pixel of the determined loop filtering area and a border of a coding unit.

For example, the ALF decoding unit 22 may determine a loop filtering area based on a minimum distance between a pixel of a current coding unit and upper and lower borders of a coding unit, and then determine a filter vertical length of a loop filter based on a minimum distance between a pixel of the determined loop filtering area and a border of a coding unit.

The ALF decoding unit 22 may determine a filter length of a loop filter based on the minimum distance between a pixel in a coding unit and a border of a coding unit, and determine a loop filtering area in an internal area away from at least one border of a coding unit the filter length determined above.

For example, the ALF decoding unit 22 may determine a filter vertical length of a loop filter based on the minimum distance between a pixel in a coding unit and upper and lower borders of a coding unit, and determine a loop filtering area in an internal area away from at least one border of a coding unit the filter vertical length determined above.

The ALF decoding unit 22 may perform loop filtering by using the loop filtering area and the loop filter that are adjusted together based on the minimum distance between a pixel of a current decoding unit and a border of a coding unit.

The ALF decoding unit 22 may determine a loop filtering method with respect to a current coding unit in conisideration of a deblocking filtering area from among internal area of the current coding unit.

The ALF decoding unit 22 may determine a loop filtering area or a filter vertical length of a loop filter based on a minimum vertical distance between a pixel of a current coding unit and upper and lower borders of a coding unit, and a height of a deblocking filtering area. A deblocking filtering area refers to an area of pixels in which data is to be modified by prospective deblocking filtering in the current coding unit.

The ALF decoding unit 22 may determine a loop filtering area in the coding unit except the deblocking filtering area.

For example, the ALF decoding unit 22 may determine a loop filtering area based on a minimum vertical distance between a pixel of a current coding unit and upper and lower borders of a coding unit and a filter vertical length of a loop filter, and may exclude at the same time a deblocking filtering area adjacent to the upper and lower borders of the coding unit from among pixels in the coding unit.

The ALF decoding unit 22 may extend a loop filtering area or a filter length of a loop filter by using neighbor pixels for deblocking filtering with respect to a current coding unit.

For example, the ALF decoding unit 22 may extend a loop filtering area or a filter vertical length of a loop filter based on a minimum vertical distance between a pixel of a current coding unit and an upper border or a lower border of a coding unit such that pixels in a coding unit are used, and such that currently accessible pixels from among external pixels of a coding unit may be used. The currently accessible pixels from among external pixels of a coding unit may be determined based on a filter vertical length of a deblocking filter of a predetermined coding unit, and thus, a loop filtering area or a filter vertical length of a loop filter may be extended based on a filter vertical length of a deblocking filter of a predetermined coding unit to be determined.

The ALF decoding unit 22 according to an embodiment may determine a loop filter within a current coding unit. Alternatively, the ALF decoding unit 22 may determine a loop filter regarding each pixel based on pixel positions in a coding unit. The pixel positions may be classified based on a distance between a pixel and a predetermined border of a coding unit. For example, a filter vertical length may be determined to be smaller as the minimum distance between a current pixel and the upper and lower borders of the coding unit narrows, and to be greater as the minimum distance becomes distant.

Alternatively, the ALF decoding unit 22 may determine at least two loop filters within a predetermined data unit. The ALF decoding unit 22 may determine at least two loop filters for each coding unit or for the whole frame comprising a current coding unit.

The ALF decoding unit 22 may determine at least two loop filters, which are different in regard to at least one of a loop filter type and a filter length, are combined for each predetermined data unit.

For example, the ALF decoding unit 22 may determine a plurality of loop filters which are different only in terms of loop filter type, for loop filtering with respect to a current data unit. Also, the ALF decoding unit 22 may determine a plurality of loop filters which are different only in terms of filter length, for loop filtering for a current data unit. Also, the ALF decoding unit 22 may determine a plurality of loop filters which are different in regard to both loop filter type and filter length. Similarly to the above-described loop filter determining method, when the ALF decoding unit 22 determines a plurality of loop filters for loop filtering with respect to a current data unit, different loop flters may also be respectively determined based on positions of filtering areas.

The ALF decoding unit 22 may determine a loop filter by using filter coefficients for loop filtering, which are extracted by the receiving unit 21. Also, the ALF decoding unit 22 according to an embodiment may read and determine whether to allow loop filtering, whether to allow modification of a loop filtering area, whether to allow modification of a loop filter, whether to allow modification of the loop filtering method, or whether to allow overlapping of loop filtering and deblocking filtering, and may also determine whether to perform loop filtering and a loop filtering method.

As described above, the ALF decoding unit 22 may directly determine a loop filtering method based on a minimum distance between a pixel and a border of a coding unit and a length of a loop filter, during a decoding operation of pixels of a current coding unit.

According to another embodiment of the present invention, when information regarding a loop filtering method which is extracted as encoding information includes loop filtering method information determined for each coding unit, the ALF decoding unit 22 may determine a loop filtering area or a loop filter based on loop filtering method information regarding a current coding unit that is read from the encoding information.

The restoring unit 23 according to an embodiment may combine decoded video data that is decoded for each coding unit and data on which loop filtering is performed by using the ALF decoding unit to restore and output a video.

Accordingly, the video decoding apparatus 20 according to an embodiment may determine a filtering area or a filter type of loop filtering such that maximum accessible data may be used while minimizing an operation delay or an operation load, and accordingly, the video decoding apparatus 20 may reduce encoding error by performing loop filtering based on a coding unit.

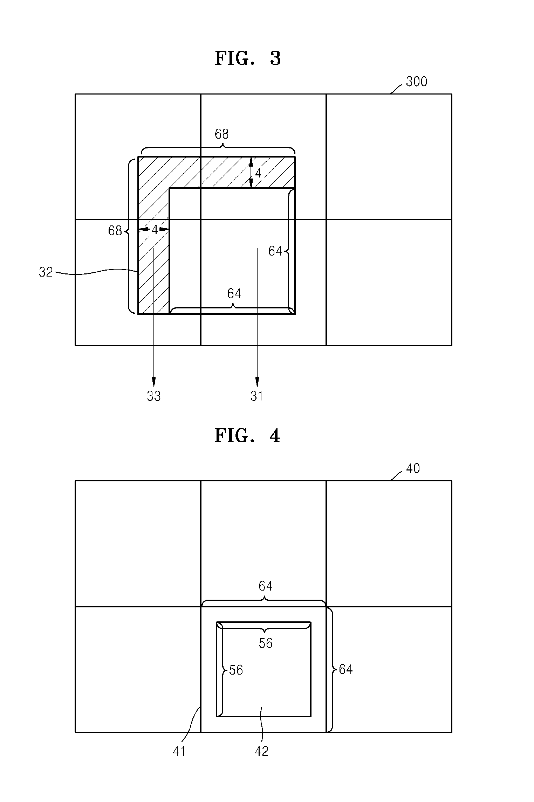

FIG. 3 illustrates a filtering area of loop filtering for a 64x64 block.

For blockwise encoding and decoding of a video, filtering is performed on each block with respect to video data of a spatial domain that is split to 64x64 blocks 30.

For block-wise filtering according to the conventional loop filtering method, when a filter vertical length L1 and a filter horizontal length L2 are used, in order that blocks of a height MO and a width NO are output as a filtering result, a height MI of an input block is a sum of the height MO of an output block and a half L1/2 of the filter vertical length L1 (MI = MO + L1/2), and a width NI of the input block is a sum of a width NO of an output block and a half of the filter horizontal length L2/2 (NI = NO + L2/2).

For example, when a 9x9 size filter is used for loop filtering of a current block 31 of a 64x64 size, and when an input block 32 of conventional loop filtering is a 68x68 size block, a 64x64 size block may be output as a result of loop filtering.

Accordingly, data of an area 33 except the current block 31 of a 64x64 size from among the input block 32 during the encoding operation of the current block 31 becomes data outside the current block 31. That is, for loop filtering of the current block 31, data of an external data area 33 is used.

In general, during an encoding operation of the current block 31, data of the current block 31 is stored in a data storage space such as a memory or a buffer which is currently easily accessible. Accessiblity to data in a data storage space may be determined based on whether an operation delay is generated to import data or whether the amount of operation load is large.

If data of the external data area 33 that is needed for filtering of the current block 31 is not stored in a memory or a buffer which is currently easily accessible, an operation delay for filtering of the current block 31 may be generated, or an operation load may increase greatly.

FIG. 4 illustrates a loop filtering area determined according to an embodiment of the present invention.

The video encoding apparatus 10 and the video decoding apparatus 20 may perform loop filtering on each of coding units 40.

The video encoding apparatus 10 and the video decoding apparatus 20 may determine a loop filtering area from among an internal area of a coding unit based on a minimum distance between a pixel of each of current coding units and a border of a coding unit. A loop filtering area according to an embodiment may be determined to be an area including pixels that are separated from at least one border of a coding unit a predetermined length, from among internal pixels of a coding unit. The predetermined length may be equal to or greater than a filter length of a loop filter.

For example, when a current coding unit 41 is a coding unit of a 64x64 size, and a filter length of a loop filter is 9 both in vertical and horizontal directions, a loop filtering area 42 may be determined as an area including pixels that are separated away from each border of the current coding unit 41 a half of a minimum filter length, that is, 4, from among internal pixels of the current coding unit 41.

As a filtered pixel of the loop filtering area 42 according to an embodiment is substantially output by loop filtering of the current coding unit 41, the current coding unit 41 may be renewed by the loop filtering.

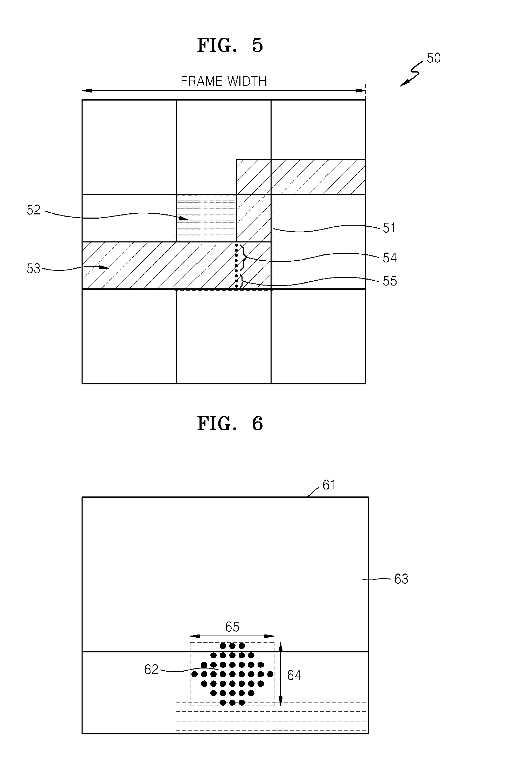

FIG. 5 illustrates a line memory area used for deblocking filtering and loop filtering for current coding units, according to an embodiment of the present invention.

When the current frame 50 is encoded or decoded, from among a current coding unit 51, pixels which are on the same line as pixels 54 may be renewed by loop filtering with respect to a current loop filtering area 52, and pixels on the same line as pixels 55 may be renewed by prospective deblocking filtering.

To perform loop filtering of the current loop filtering area 52 which is currently decoded, all of pixels stored in a line memory 53 which are on the same line with neighboring pixels that are referred to during loop filtering have to be imported, including lines to which the pixels 54 and 55 belong. Accordingly, for loop filtering, when data stored in a line memory other than a currently easily accessible data space is used, an operation delay or an operation load may increase greatly.

FIG. 6 illustrates a method of determining a loop filter according to an embodiment of the present invention.

The video encoding apparatus 10 and the video decoding apparatus 20 according to an embodiment may adjust a type of a loop filter 62 or a filter length of the loop filter 62 in order to determine the loop filter 62 for loop filtering of each coding unit 61.

The loop filter 62 according to an embodiment may be a square shaped filter in which a filter vertical length and a filter horizontal length are identical, but may also be various polygonal filters such as a rectangular filter, a rhombic filter, or a diamond-shaped filter.

Also, a filter vertical length 64 and a filter horizontal length 65 of the loop filter 62 may be determined, respectively. For example, the filter vertical length 64 may be shorter than the filter horizontal length 65.

A loop filtering area 63 may be determined in the coding unit 61 based on the shape of the determined loop filter 62. When loop filtering is performed by using an external pixel of a current coding unit according to the filter vertical length 64 or the filter horizontal length 65 of the loop filter 62, the loop filtering area 63 may be determined such that an additional calculation amount which may be generated to import data from a memory in which external pixels are stored.

For a similar purpose, if the loop filtering area 63 is determined in advance in a current coding unit, the filter vertical length 64 or the filter horizontal length 65 of the loop filter 62 may be determined based on the loop filtering area 63.

When an external pixel is used for loop filtering with respect to the current coding unit 61, external pixels at left and right borders of the current coding unit 61 may be stored in the same line memory as pixels of the current coding unit 61, but external pixels at upper and lower borders of the current coding unit 61 are stored in an additional line memory. Accordingly, since a delay is likely to occur when approaching the external pixels at the upper and lower borders rather than the external pixels at the left and right borders of the current coding unit 61, the filter vertical length 64 may preferably be shorter than the filter horizontal length 65.

An additional calculation amount generated when using external pixels of the current coding unit 61 in horizontal loop filtering is relatively not large, and thus, according a loop filtering determining method of another embodiment, adjustment of widths of the filter horizontal length 65 of the loop filter 62 and the loop filtering area 63 may be omitted in connection with loop filtering of the current coding unit 61. That is, for loop filtering of the current coding unit 61, only the filter vertical length 64 of the loop filter 62 or a height of the loop filtering area 63 may be selectively adjusted based on a minimum vertical distance from a pixel of the current coding unit 61 to upper and lower borders thereof.

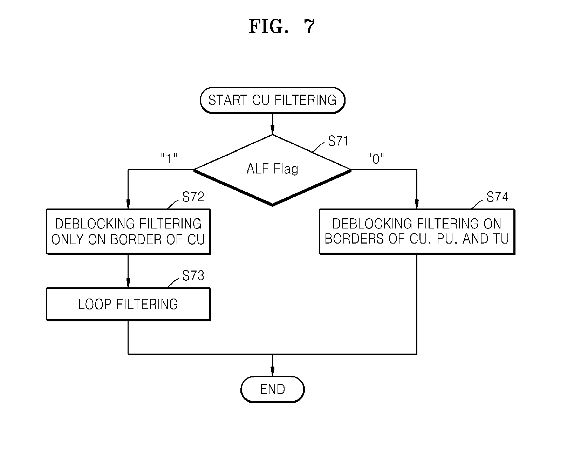

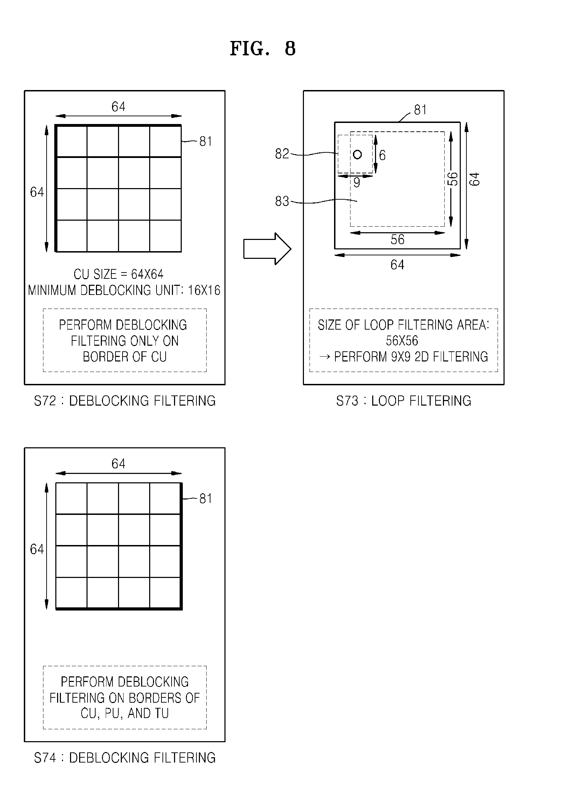

FIGS. 7 and 8 are flowcharts illustrating a method of performing deblocking filtering and loop filtering with respect to current coding units according to a relationship between deblocking filtering and loop filtering according to an embodiment of the present invention.

While performing loop filtering in order to reduce various errors which may occur by encoding and decoding operations such as prediction encoding, quantization, motion estimation, or the like, the video encoding apparatus 10 and the video decoding apparatus 20 may perform deblocking filtering in order to reduce block artifacts which may occur by video encoding and decoding in block units such as coding units.

The video encoding apparatus 10 and the video decoding apparatus 20 may select a filtering method such that deblocking filtering and loop filtering are not overlapped with respect to pixels of a current coding unit.

Coding units having a tree structure may include prediction units and transformation units for prediction and transformation, respectively. The relationship between coding units having a tree structure and the prediction units and the transformation units will be described later with reference to FIGS. 13 through 23.

Deblocking filtering according to an embodiment may be performed not only on borders of a coding unit but also on borders of a prediction unit and a transformation unit included in the coding unit. However, when deblocking filtering is performed on borders of the prediction unit and the transformation unit included in the coding unit, the deblocking filtering may be overlapped with loop filtering of a loop filtering area in the coding unit, and thus, a deblocking filtering method and a loop filtering method may be selectively determined.

An operation in which the video decoding apparatus 20 determinines a filtering method for each coding unit is described with reference to the flowchart of FIG. 7, and a filtering method for each operation will be described in detail with reference to FIG. 8.

In operation S70, filtering of a current coding unit CU 81 is started.

In operation S71, from among loop filtering relevant information extracted by parsing a bit stream, an ALF flag indicating whether loop filtering of the current coding unit CU 81 is allowed is read to thereby determine whether to perform loop filtering on the current coding unit CU 81. When loop filtering of the current coding unit CU 81 is allowed, the method proceeds to S72, if not allowed, the method proceeds to S74.

In operation S72, deblocking filtering may be performed only on a border of the current coding unit CU 81, and in operation S73, loop filtering on the current coding unit CU 81 may be performed.

For example, deblocking filtering according to an embodiment may be performed on a border of at least a 16x16 size data unit. In operation S72, deblocking filtering according to an embodiment may be performed only on a border of the current coding unit 81.

In operation S73, when a filtering vertical length and a filter horizontal length of a loop filter according to an embodiment of the present invention are each 9, an 56x56 size internal area that is away from each of upper, lower, left, and right borders of the current coding unit CU 81 four pixels may be determined as a loop filtering area 83. Also, loop filtering according to an embodiment may be performed in areas except pixels whose values are modified by deblocking filtering within a coding unit from among pixels that are adjacent to borders in the internal area of the current coding unit CU 81.

When a maximum of four internal pixels are modified from a border pixel are modified in a vertical direction by deblocking filtering on the current coding unit CU 81, a 56x56 size loop filtering area 83 that is determined by a current loop filter length may be maintained. If more than five internal pixels are modified in a direction vertical to the border pixel by deblocking filtering, the loop filtering area 83 may be reduced to be smaller than a 56x56 size.

In operation S74, with respect to the current coding unit 81, deblocking filtering may be performed not only on borders of a coding unit but also on borders of prediction units and transformation units included in the coding unit.

For example, deblocking filtering may be performed on a border of a data unit having a size of at least a 16x16 size, and thus, together with deblocking on borders of the current coding unit CU 81, deblocking filtering on borders of prediction units and transformation units of a size larger than a 16x16 size from among prediction units and transformation units included in the current coding unit CU 81 may be performed. In this case, however, loop filtering on internal pixels of the current coding unit CU 81 may be skipped.

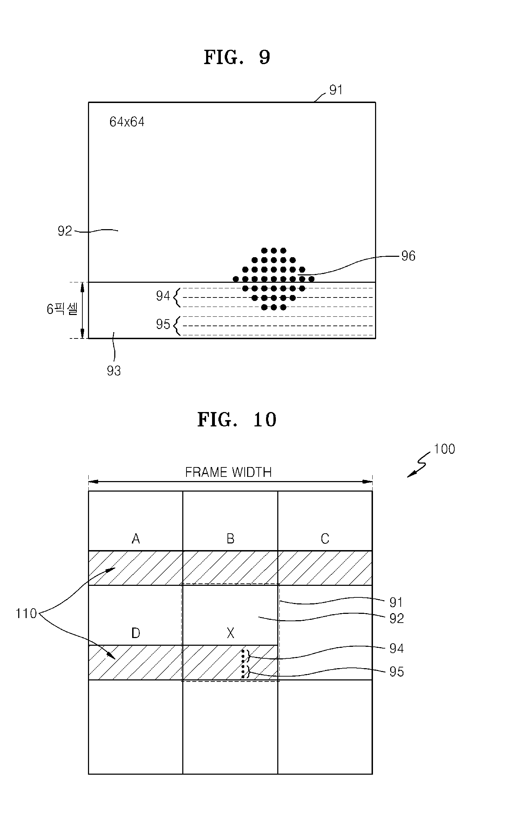

FIGS. 9 and 10 illustrate a loop filtering area 92 determined according to another embodiment of the present invention and a loop filtering area with respect to a current coding unit 91.

Referring to FIGS. 9 and 10, vertical loop filtering is adjusted considering that accessibility to a line memory in which external pixels on upper and lower borders of the current coding unit 91 is lower than accessibility to a line memory in which external pixels on left and right borders thereof. That is, a height of the loop filtering area 92 may be adjusted, and a filter vertical length of a loop filter 96 may be determined to be shorter than a filter horizontal length thereof. For example, the loop filter 96 may be a polygonal shape having a filter vertical length and a filter horizontal length of 7 and 9, respectively.

In addition, when loop filtering is performed on pixels on upper and lower borders of the loop filtering area 92 in the current coding unit 91, every three external pixels are referred to in a vertical direction to a border of the loop filtering area 92 along a filter vertical length of the loop filter 96.

In this case, three external pixles outside an upper border of the current coding unit 91 may be a portion of lower pixels of a neighboring coding unit B which are necessary for deblocking filtering of the current coding unit 91. The number of external pixels that are necessary for deblocking filtering of the upper border of the current coding unit 91 may be determined based on a filter vertical length of a deblocking filter.

In regard to a decoding period for the current coding unit 91, the neighboring coding unit B is an already decoded data unit, and the lower pixels of the neighboring coding unit B that are necessary for deblocking filtering on the upper border of the current coding unit 91 are already imported and stored in a predetermined data storage space, and thus data may be easily accessible when performing loop filtering.

If every three external pixels are stored from the upper border of the current coding unit 91 for deblocking filtering, in a data storage space which is easily accessible when performing loop filtering, since all of upper border external pixels neede for loop filtering of the current coding unit 91 are easily accessible, the loop filtering area 92 may be extended and determined such that loop filtering according to an embodiment may be performed up to internal pixels that are adjacent to the upper border of the current coding unit 91.

However, in regard to loop filtering of a lower border of the current coding unit 91, since external data on a lower border of the current coding unit 91 is not yet decoded due to the decoding sequence, external pixels outside the lower border of the current coding unit 91 may not be used. In addition, a pixel group 92 including some pixels on the lower border of the current coding unit 91 is data which is to be modified by prospective deblocking filtering.

Accordingly, the pixel group 95 whose data is to be modified by prospective deblocking filtering may be excluded from the loop filtering area 92. Also, the loop filtering area 92 may be determined such that the pixel group 95 whose data is to be modified through prospective deblocking filtering is not referred to as neighbor pixels of loop filtering. A pixel group 94 to which loop filtering is performed may be determined by using the pixel group 95 whose data is to be modified by deblocking filtering, based on a filter vertical length of the loop filter 96, and such that the pixel group 94 is also excluded from the loop filtering area 92 together with the pixel group 95.

In detail, the loop filtering area 92 of the current coding unit 91 according to an embodiment will be determined below as an example below when three external, neighbor pixels are used for deblocking filtering on a border pixel of the current coding unit 91, and a filter vertical length of the loop filter 96 is 7.

The loop filtering area 92 of the current coding unit 91 may include up to an internal area adjacent to the upper border of the current coding unit 91 through deblocking filtering of the current coding unit 91. Also, the lower border of the loop filtering area 92 may be reduced by every three pixels from the lower border of the current coding unit 91 to the inside thereof in consideration of the pixel group 95 whose data is to be modified by prospective deblocking filtering.

Also, by using the pixel group 95 whose data is to be modified by prospective deblocking filtering as neighbor pixels, and in consideration of the pixel group 94 on which loop filtering is to be performed, the lower border of the loop filtering area 92 may be additionally reduced by every three pixels which correspond to a half of a filter vertical length of a loop filter. Consequently, loop filtering is not performed on an area 93 including six pixels in a vertical direction from pixels on the lower border of the current coding unit 91, and the remaining area except the area 93 adjacent to the lower border of the current coding unit 91 may be determined as the loop filtering area 92.

For loop filtering regarding coding units A, B, C, D, and X of a current frame 100, loop filtering according to an embodiment may not be performed on an area 110 in which six pixels are included from lower border pixels of each of coding unit in a vertical direction, thereby minimizing an operation delay which may additionally occur due to importation of data by neighboring pixels for loop filtering.

Also, as loop filtering may be performed by referring to data which is easily accessible for deblocking filtering from among external pixels outside the upper border of each coding unit, as much as possible, encoding error due to the loop filtering may be further reduced.

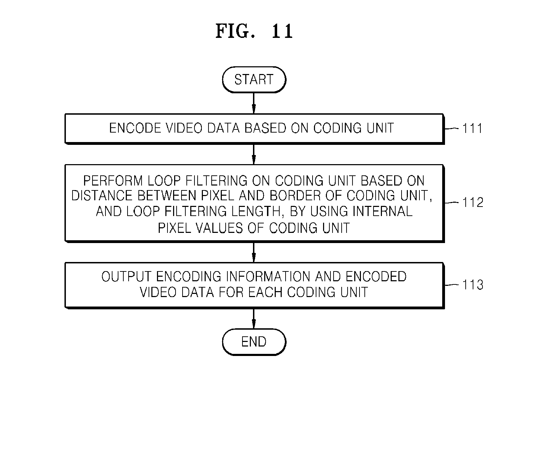

FIG. 11 is a flowchart illustrating a video encoding method using loop filtering according to an embodiment of the present invention.

According to the video encoding method using loop filtering according to an embodiment, loop filtering according to an embodiment is performed while performing a basic video encoding operation in connection with a video encoding processor.

In operation 111, video data is encoded based on coding units which are obtained by splitting video data to spatial domains.

In operation 112, loop filtering may be performed on a coding unit based on a minimum distance between a pixel on which loop filtering is to be performed, from among video data of a coding unit and a fitler vertical length of a loop filter. At least one of a loop filtering area and a loop filter may be determined such that loop filtering on a coding unit according to an embodiment is performed using internal pxiels of the coding unit. Data of a spatial domain on which loop filtering is performed may be encoded again by motion estimation, transformation, and quantization.

According to an embodiment, a loop filtering area may be determined in an internal area away from at least one border of a coding unit a predetermined distance, based on a minimum distance between a pixel in a coding unit and a border of the coding unit and a filter length. A loop filtering area may be determined in an internal area that is away from at least one border of a coding unit at least a filter vertical length.

According to an embodiment, a loop filter may be determined such that a filter length of the loop filter is equal to or smaller than a minimum distance between a pixel in a coding unit and a border of a coding unit.

For example, at least one of a loop filtering area and a loop filter may be determined based on a minimum vertical distance with respect to borders of a coding unit and a filter vertical length of a loop filter. In addition, a loop filtering method may be determined based on a minimum horizontal distance with respect to borders of a coding unit and a filter horizontal length of a loop filter. A filter vertical length according to an embodiment may be determined to be shorter than a filter horizontal length.

Also, a loop filtering area may be determined based on a minimum distance between a pixel in a coding unit and a border of a coding unit, and a fitler length of a loop filter may be determined based on a minium distance between a pixel of the determined loop filtering area and a border of a coding unit.

In addition, a loop filtering area may be determined based on a distance between a pixel in a coding unit and a border of the coding unit and a filter length of a loop filter, and within an internal area away from at least one border of a coding unit the previously determined filter length.

According to an embodiment, a loop filtering area may be determined based on a minimum distance between a pixel of a coding unit and a border of the coding unit, a filter length, and a height of a deblocking filtering area of the coding unit. A filter length of a loop filter may be determined based on a minium distance between a pixel of a coding unit and a border of the coding unit, a filter length, and a height of a deblocking filtering area of the coding unit.

According to an embodiment, within an internal area of a coding unit, a loop filtering area may be determined in the remaining area except an area whose data is to be modified by prospective deblocking filtering, that is, a deblocking filtering area.

According to an embodiment, at least one of a loop filtering area and a filter vertical length of a loop filter may be extended based on the number of pixels used in deblocking filtering for a coding unit, that is, a vertical length of deblocking filtering, from among external pixels on an upper border of a coding unit.

According to an embodiment, at least two loop filters may be determined for each coding unit or each frame. For example, for loop filtering of a current coding unit, at least two loop filters may be determined. In this case, the determined at least two loop filters may be determined to be different in terms of at least one of a loop type type and a filter length.

In operation 113, encoding information related to an encoding method based on a coding unit and encoded video data are output for each coding unit. The encoding information according to an embodiment may include information in regard to loop filtering performed for each coding unit, regarding whether loop filtering is allowed, determination of a loop filtering method, and coefficients of a loop filter. A bit stream including encoding information about an encoding mode for decoding encoded video data and video data encoded for each coding unit may be output.

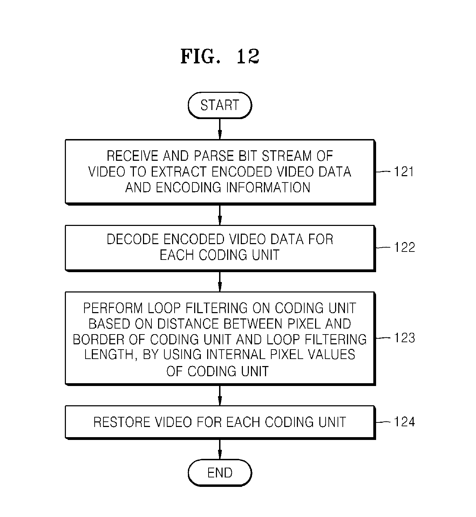

FIG. 12 is a flowchart illustrating a video decoding method by uising loop filtering according to an embodiment of the present invention.

In operation 121, a bit stream of a video may be received and parsed to thereby extract encoding information and encoded video data.

In operation 122, video data encoded for each coding unit may be decoded to data of a spatial domain through variable length decoding, inverse quantization, and inverse transformation, by using the encoding information extracted in operatoin 121. According to the video decoding method by using loop filtering according to an embodiment of the present invention, basic video decoding operations for each coding unit may be performed in connection with a video decoding processor.

A loop filtering method may be determined based on a minimum distance between a pixel on which loop filtering is to be performed within a coding unit and a border of a coding unit, and a filter length of a loop filter, such that loop filtering may be performed by using internal pixel values of the coding unit.

According to an embodiment of the present invention, a loop filtering method may be determined within an internal area that is away from at least one border of a coding unit at least a filter vertical length, based on a minimum distance between a pixel in a coding unit and a border of a coding unit.

According to an embodiment, a filter length of a loop filter may be determined to be smaller than or equal to a minium distance between a pixel in a coding unit and a border of a coding unit.

For example, based on a minimum vertical distance with respect to borders of a coding unit and a filter vertical length of a loop filter, at least one of a loop filtering area and a loop filter may be determined. In addition, based on a horizontal minium distance with respect to borders of a coding unit and a filter horizontal length of a loop filter, at least one of a loop filtering area and a loop filter may be determined. A filter vertical length according to an embodiment may be determined to be shorter than a filter horizontal length.

Also, a loop filtering area may be determined based on a minimum distance between a pixel in a coding unit and a border of a coding unit, and a filter length of a loop filter may be determined based on a minimum distance between a pixel of the determined loop filtering area and a border of a coding unit. Also, according to an embodiment, a loop filtering area may be determined based on a distance between a pixel in a coding unit and a border of a coding unit and a filter length of a loop filter, and within an internal area away from at least one border of a coding unit in a coding unit the above-described filter length.

According to an embodiment, based on a minimum distance between a pixel of a coding unit and a border of a coding unit and a height of a deblocking filtering area of a coding unit, at least one of a loop filtering area and a filter length of a loop filter may be determined.

For example, according to loop filtering according to an embodiment, a loop filtering area may be determined in the remaining area except an area in which data is modified by prospective deblocking filtering in an internal area of a coding unit.

According to an embodiment, from among external pixels of an upper border of a coding unit, based on the number of pixels used for deblocking filtering for a coding unit, that is, a vertical length of a deblocking filter, at least one of a loop filtering area and a filter vertical length of a loop filter may be extended.

According to an embodiment, for each coding unit or each frame, at least two loop filters which are different in terms of at least one of a filter type and a filter length may be determined.

In operation 123, with respect to video data that is decoded in operation 122, loop filtering with respect to a coding unit may be performed by using internal pixels of a coding unit. For each coding unit according to an embodiment, decoded video data and data to which loop filtering is performed may be combined to restore a video.

Hereinafter, a method of determining coding units having a tree structure according to an embodiment will be described in the case when the video encoding apparatus 10 performs loop filtering based on coding units of a tree structure.

The ALF coding unit 11 may split a current picture based on a maximum coding unit for the current picture of an image. If the current picture is larger than the maximum coding unit, image data of the current picture may be split into at least one maximum coding unit. The maximum coding unit according to an embodiment of the present invention may be a data unit having a size of 32x32, 64x64, 128x128, 256x256, etc., wherein a shape of the data unit is a square having a width and length in squares of 2. The image data may be output to the ALF coding unit 11 according to the at least one maximum coding unit.

A coding unit according to an embodiment of the present invention may be characterized by a maximum size and a depth. The depth denotes a number of times the coding unit is spatially split from the maximum coding unit, and as the depth deepens, deeper coding units according to depths may be split from the maximum coding unit to a minimum coding unit. A depth of the maximum coding unit is an uppermost depth and a depth of the minimum coding unit is a lowermost depth. Since a size of a coding unit corresponding to each depth decreases as the depth of the maximum coding unit deepens, a coding unit corresponding to an upper depth may include a plurality of coding units corresponding to lower depths.

As described above, the image data of the current picture is split into the maximum coding units according to a maximum size of the coding unit, and each of the maximum coding units may include deeper coding units that are split according to depths. Since the maximum coding unit according to an embodiment of the present invention is split according to depths, the image data of a spatial domain included in the maximum coding unit may be hierarchically classified according to depths.

A maximum depth and a maximum size of a coding unit, which limit the total number of times a height and a width of the maximum coding unit are hierarchically split may be predetermined.

The ALF coding unit 11 encodes at least one split region obtained by splitting a region of the maximum coding unit according to depths, and determines a depth to output a finally encoded image data according to the at least one split region. In other words, the ALF coding unit 11 may determine a coded depth by encoding the image data in the deeper coding units according to depths, according to the maximum coding unit of the current picture, and selecting a depth having the least encoding error. The determined coded depth and the encoded image data according to the maximum coding units are output to the output unit 12.

The image data in the maximum coding unit is encoded based on the deeper coding units corresponding to at least one depth equal to or below the maximum depth, and results of encoding the image data are compared based on each of the deeper coding units. A depth having the least encoding error may be selected after comparing encoding errors of the deeper coding units. At least one coded depth may be selected for each maximum coding unit.

The size of the maximum coding unit is split as a coding unit is hierarchically split according to depths, and as the number of coding units increases. Also, even if coding units corresponding to same depth in one maximum coding unit, each of the coding units corresponding to the same depth may be split to a lower depth by measuring an encoding error of the image data of the each coding unit, seperately. Accordingly, even when image data is included in one maximum coding unit, the encoding errors may differ according to regions in the one maximum coding unit, and thus the coded depths may differ according to regions in the image data. Thus, one or more coded depths may be determined in one maximum coding unit, and the image data of the maximum coding unit may be divided according to coding units of at least one coded depth.

Accordingly, the ALF coding unit 11 may determine coding units having a tree structure included in the maximum coding unit. The 'coding units having a tree structure' according to an embodiment of the present invention include coding units corresponding to a depth determined to be the coded depth, from among all deeper coding units included in the maximum coding unit. A coding unit of a coded depth may be hierarchically determined according to depths in the same region of the maximum coding unit, and may be independently determined in different regions. Similarly, a coded depth in a current region may be independently determined from a coded depth in another region.

A maximum depth according to an embodiment of the present invention is an index related to the number of splitting times from a maximum coding unit to a minimum coding unit. A maximum depth according to an embodiment of the present invention may denote the total number of splitting times from the maximum coding unit to the minimum coding unit. For example, when a depth of the maximum coding unit is 0, a depth of a coding unit, in which the maximum coding unit is split once, may be set to 1, and a depth of a coding unit, in which the maximum coding unit is split twice, may be set to 2. Here, if the minimum coding unit is a coding unit in which the maximum coding unit is split four times, 5 depth levels of depths 0, 1, 2, 3 and 4 exist, and thus the maximum depth may be set to 4.

Prediction encoding and transformation may be performed according to the maximum coding unit. The prediction encoding and the transformation are also performed based on the deeper coding units according to a depth equal to or depths less than the maximum depth, according to the maximum coding unit. Transformation may be performed according to methods of frequency transformation, orthogonal transformation, or integer transformation.

Since the number of deeper coding units increases whenever the maximum coding unit is split according to depths, encoding including the prediction encoding and the transformation is performed on all of the deeper coding units generated as the depth deepens. For convenience of description, the prediction encoding and the transformation will now be described based on a coding unit of a current depth, in at least one maximum coding unit.

The video encoding apparatus 10 may variously select a size or shape of a data unit for encoding the image data. In order to encode the image data, operations, such as prediction encoding, transformation, and entropy encoding, are performed, and at this time, the same data unit may be used for all operations or different data units may be used for each operation.

For example, the video encoding apparatus 10 may select not only a coding unit for encoding the image data, but also a data unit different from the coding unit so as to perform the prediction encoding on the image data in the coding unit.

In order to perform prediction encoding in the maximum coding unit, the prediction encoding may be performed based on a coding unit corresponding to a coded depth, i.e., based on a coding unit that is no longer split to coding units corresponding to a lower depth. Hereinafter, the coding unit that is no longer split and becomes a basis unit for prediction encoding will now be referred to as a 'prediction unit'. A partition obtained by splitting the prediction unit may include a data unit obtained by splitting at least one of a height and a width of the prediction unit.

For example, when a coding unit of 2Nx2N (where N is a positive integer) is no longer split, the coding unit becomes a prediction unit of 2Nx2N, and a size of a partition may be 2Nx2N, 2NxN, Nx2N, or NxN. Examples of a partition type include symmetrical partitions that are obtained by symmetrically splitting a height or width of the prediction unit, partitions obtained by asymmetrically splitting the height or width of the prediction unit, such as 1:n or n:1, partitions that are obtained by geometrically splitting the prediction unit, and partitions having arbitrary shapes.

A prediction mode of the prediction unit may be at least one of an intra mode, an inter mode, and a skip mode. For example, the intra mode or the inter mode may be performed on the partition of 2Nx2N, 2NxN, Nx2N, or NxN. Also, the skip mode may be performed only on the partition of 2Nx2N. The encoding is independently performed on one prediction unit in a coding unit, thereby selecting a prediction mode having a least encoding error.

The video encoding apparatus 10 may also perform the transformation on the image data in a coding unit based not only on the coding unit for encoding the image data, but also based on a data unit that is different from the coding unit.

In order to perform the transformation in the coding unit, the transformation may be performed based on a transformation unit having a size smaller than or equal to the coding unit. For example, the transformation unit may include a data unit for an intra mode and a data unit for an inter mode.

Similarly to the coding unit having a tress structure, the transformation unit in the coding unit may be recursively split into smaller sized regions, and thus, residual data in the coding unit may be divided according to transformation depth.

Also for a transformation unit according to an embodiment of the present invention, transformation depth denoting times of splitting a coding unit by splitting a height and a width of the coding unit to be a transformation may be set. For example, if a size of a transformation unit of a current coding unit having a size of 2Nx2N is 2Nx2N, a transformation depth may be set to 0, and if a size of a transformation unit is NxN, transformation depth may be set to 1, and if a size of a transformation unit is N/2xN/2, a transformation depth may be set to 2. That is, a transformation unit having a tree structure may also be set according to transformation depth.

Encoding information according to coding units corresponding to a coded depth requires not only information about the coded depth, but also information related to prediction and transformation. Accordingly, the ALF coding unit 11 not only determines a coded depth having a least encoding error, but also a partition type in a prediction unit, a prediction mode according to prediction units, and a size of a transformation unit for transformation.

Coding units having a tree structure in a maximum coding unit and a method of determining a partition, according to embodiments of the present invention, will be described in detail later with reference to FIGS. 13 through 23.

The ALF coding unit 11 may measure an encoding error of deeper coding units according to depths by using Rate-Distortion Optimization based on Lagrangian multipliers.

The ALF coding unit 11 may perform loop filtering on video data of a spatial domain that is restored by performing inverse quantization, inverse transformation, and motion estimation with respect to a quantized transformation coefficient of a predetermined coding unit from among coding units having a tree structure.

The ALF coding unit 11 may output a transformation coefficient that is quantized by performing motion estimation, transformation, and quantization agaom to the video data that is filtered by loop filtering. Also, the quantized transformation coefficient may be output after being subject to variable length coding.

The ALF coding unit 11 may determine a loop filtering method based on a minimum distance between a pixel on which loop filtering is to be performed, from among internal pixels of a coding unit, and a border of a coding unit. A loop filtering method according to an embodiment may also be determined based on a filter length of a loop filter. The method of determining a loop filtering method according to an embodiment is as described above with reference to FIGS. 1 through 12.

The output unit 12 outputs the image data in the maximum coding unit, which is encoded based on the at least one coded depth determined by the ALF coding unit 11, and information about the encoding mode according to the coded depth, in bit streams.

The encoded image data may be obtained by encoding residual data of an image.

The information about the encoding mode according to coded depth may include information about the coded depth, about the partition type in the prediction unit, the prediction mode, and the size of the transformation unit.

The information about the coded depth may be defined by using split information according to depths, which indicates whether encoding is performed on coding units of a lower depth instead of a current depth. If the current depth of the current coding unit is the coded depth, image data in the current coding unit is encoded in a coding unit according to the current depth, and thus the split information of the current depth may be defined not to split the current coding unit to a lower depth. Alternatively, if the current depth of the current coding unit is not the coded depth, encoding using the coding unit of the lower depth is to be tried, and thus the split information of the current depth may be defined to split the current coding unit to obtain the coding units of the lower depth.

If the current depth is not the coded depth, encoding is performed on the coding unit that is split into the coding unit of the lower depth. Since at least one coding unit of the lower depth exists in one coding unit of the current depth, the encoding is repeatedly performed on each coding unit of the lower depth, and thus the encoding may be recursively performed for the coding units having the same depth.

Since the coding units having a tree structure are determined for one maximum coding unit, and information about at least one encoding mode is determined for a coding unit of a coded depth, information about at least one encoding mode may be determined for one maximum coding unit. Also, a coded depth of the image data of the maximum coding unit may be different according to locations since the image data is hierarchically split according to depths, and thus information about the coded depth and the encoding mode may be set for the image data.

Accordingly, the output unit 12 may assign encoding information about a corresponding coded depth and an encoding mode to at least one of the coding unit, the prediction unit, and a minimum unit included in the maximum coding unit. The output unit 12 may insert the encoding information about a corresponding encoding depth and and an encoding mode to a header of a bit stream, a sequence parameter set (SPS), or a picture parameter set (PPS) or the like for transmitting of coded video data, and output the same.

The minimum unit according to an embodiment of the present invention is a rectangular data unit obtained by splitting a minimum coding unit constituting the lowermost depth by 4. Alternatively, the minimum unit may be a maximum rectangular data unit that may be included in all of the coding units, prediction units, partition units, and transformation units included in the maximum coding unit.

For example, the encoding information output through the output unit 12 may be classified into encoding information according to deeper coding units, and encoding information according to prediction units. The encoding information according to the deeper coding units may include the information about the prediction mode and about the size of the partitions. The encoding information transmitted according to the prediction units may include information about an estimated direction of an inter mode, about a reference image index of the inter mode, about a motion vector, about a chroma component of an intra mode, and about an interpolation method of the intra mode.

Also, structure information for determining coding units having a tree structure such as information about a maximum size of the coding unit defined according to pictures, slices, or grouop of pictures (GOPs), and information about a variable range of the depth may be inserted into a header of a bit stream, a SPS, a PPS or the like.

Also, the encoding information output through the output unit 12 may include transformation indices. Transformation index information according to an embodiment of the present invention may denote information about a structure of a transformation unit used in transforming a current coding unit. For example, transformation index information according to an embodiment of the present invention may include information about the number of times of splitting a current coding unit to a final-level transformation unit and a size and shape of a transformation unit.

Transformation index information according to an embodiment of the present invention may indicate whether a current transformation unit is split into a transformation unit of a lower level. For example, as transformation index information according to an embodiment of the present invention, a transformation unit split bit which is data of a bit indicating whether a transformation unit is split into a transformation unit of a lower level may be used.

Also, coding unit output through the output unit 12 may transmit filter coefficients for loop filtering as encoding information. Also, the output unit 12 according to an embodiment of the present invention may transmit encoding information about a loop filtering method for signaling whether loop filtering is allowed, whether modification of a loop filtering area is allowed, whether modification of a loop filter is allowed, whether modification of the loop filtering method is allowed, or whether loop filtering may be overlapped with deblocking filtering.

In the video encoding apparatus 10 according to the simplest embodiment of the present invention, the deeper coding unit may be a coding unit obtained by splitting a height or width of a coding unit of an upper depth, which is one layer above, by two. In other words, when the size of the coding unit of the current depth is 2Nx2N, the size of the coding unit of the lower depth is NxN. Also, the coding unit of the current depth having the size of 2Nx2N may include maximum 4 of the coding units of the lower depth.

Accordingly, the video encoding apparatus 10 may form the coding units having the tree structure by determining coding units having an optimum shape and an optimum size for each maximum coding unit, based on the size of the maximum coding unit and the maximum depth determined considering characteristics of the current picture. Also, since encoding may be performed on each maximum coding unit by using any one of various prediction modes and transformations, an optimum encoding mode may be determined considering characteristics of the coding unit of various image sizes.

Thus, if an image having a high resolution or a large data amount is encoded in conventional macroblock units, a number of macroblocks per picture excessively increases. Accordingly, a number of pieces of compressed information generated for each macroblock increases, and thus it is difficult to transmit the compressed information and data compression efficiency decreases. However, by using the video encoding apparatus 10, image compression efficiency may be increased since a coding unit is adjusted in consideration of characteristics of an image while increasing a maximum size of a coding unit while considering a size of the image.

Hereinafter, a method of decoding a video based on coding units having a tree structure according to an embodiment to perform loop filtering based on coding units having a tree structure according to an embodiment will be described.

The definitions of terms such as coding unit, depth, prediction unit, transformation unit, and various encoding modes for various processings of the video decoding apparatus 20 according to an embodiment are the same as those described with reference to the video encoding apparatus 10.

The receiving unit 21 may receive a bit stream of an encoded video and parse the same. The receiving unit 21 may extract image data encoded for each coding unit according to coding units having a tree structure for each maximum coding unit from the parsed bit stream to output the same to the ALF decoding unit 22. The receiving unit 21 may parse and extract structure information for determining coding units having a tree structure such as information about a maxium size of a coding unit of a current picture and a variable length of depth or the like, from at least one of a header, SPS, and PPS regarding a current picture from the received bit stream.

Also, the receiving unit 21 may extract encoding depth of coding units having a tree structure for each maxium coding unit and information about an encoding mode from the parsed bit stream. The extracted information about encoding depth and encoding modes is output to the ALF decoding unit 22. That is, image data of a bit rate is split to maximum coding units so that the ALF decoding unit 22 may decode image data for each maximum coding unit.

The information about encoding depth and encoding modes for each maximum coding unit may be set for at least one piece of encoding depth information, and information about encoding modes for each encoding depth may include partition type information of a corresponding coding unit, prediction mode information, and size information of a transformation unit. Also, as encoding depth information, split information according to depths may also be extracted.

Also, from the encoding mode information that is extracted from the parsed bit stream by using the ALF decoding unit 22, information about transformation indices may be read. The ALF decoding unit 22 may configure a transformation unit of a current coding unit based on the transformation index information extracted by the receiving unit 21, and decode encoded data by performing inverse transformation of a current coding unit based on the transformation unit.

Also, encoding information extracted by using the receiving unit 21 may include filter coefficients for loop filtering. Also, the receiving unit 21 may extract encoding information about loop filtering according to an embodiment, from the bit stream, and information regarding whether loop filtering is allowed, whether modification of a loop filtering area is allowed, whether modification of a loop filter is allowed, whether modification of the loop filtering method is allowed, or whether loop filtering may be overlapped with deblocking filtering may also be read from the encoding mode information.

After the ALF decoding unit 22 has decoded video data of a spatial domain based on coding units, the decoding unit 230 may restore pictures of a video.

The information about the coded depth and the encoding mode according to each maximum coding unit extracted by using the receiving unit 21 is information about a coded depth and an encoding mode determined to generate a minimum encoding error when an encoder such as the video encoding apparatus 10 repeatedly performs encoding for each deeper coding unit according to depths according to each maximum coding unit. Accordingly, the video decoding apparatus 20 may restore an image by decoding the image data according to an encoding method that generates the minimum encoding error.

Since encoding information about the coded depth and the encoding mode may be assigned to a predetermined data unit from among a corresponding coding unit, a prediction unit, and a minimum unit, the receiving unit 21 may extract the information about the coded depth and the encoding mode according to the predetermined data units. The predetermined data units to which the same information about the coded depth and the encoding mode is assigned may be inferred to be the data units included in the same maximum coding unit if the information about the coded depth and the encoding mode of a corresponding maximum encoding unti is recorded for each predetermined data unit.

The ALF decoding unit 22 restores the current picture by decoding the image data in each maximum coding unit based on the information about the coded depth and the encoding mode according to the maximum coding units. In other words, the ALF decoding unit 22 may decode the encoded image data based on the extracted information about the partition type, the prediction mode, and the transformation unit for each coding unit from among the coding units having the tree structure included in each maximum coding unit. A decoding process may include a prediction including intra prediction and motion compensation, and an inverse transformation.

The ALF decoding unit 22 may perform intra prediction or motion compensation according to a partition and a prediction mode of each coding unit, based on the information about the partition type and the prediction mode of the prediction unit of the coding unit according to coded depths.

Also, the ALF decoding unit 22 may perform inverse transformation according to each transformation unit in the coding unit, based on the information about the size of the transformation unit of the coding unit according to coded depths, so as to perform the inverse transformation according to maximum coding units.

The ALF decoding unit 22 may determine at least one coded depth of a current maximum coding unit by using split information according to depths. If the split information indicates that image data is no longer split in the current depth, the current depth is a coded depth. Accordingly, the ALF decoding unit 22 may decode encoded image data of a coding unit corresponding to the current coded depth in the current maximum coding unit by using the information about the partition type of the prediction unit, the prediction mode, and the size of the transformation unit for each coding unit corresponding to the coded depth, and output the image data of the current maximum coding unit.

In other words, data units containing the encoding information including the same split information may be gathered by observing the encoding information set assigned for the predetermined data unit from among the coding unit, the prediction unit, and the minimum unit, and the gathered data units may be considered to be one data unit to be decoded by the ALF decoding unit 22 in the same encoding mode.

The ALF decoding unit 22 may perform loop filtering on the restored video data of a spatial domain that is restored by performing variable length decoding, inverse quantization, inverse transformation, and motion compensation on coding units having a tree structure.

The ALF decoding unit 22 may determine a loop filtering method according to an embodiment based on a minimum distance between a pixel on which loop filtering is to be performed, from among internval pixels of a coding unit, and a border of the coding unit. A loop filtering method according to an embodiment may also be determined based on a filter length of a loop filter. The method of determining a loop filtering method is as described above with reference to FIGS. 1 through 12.

The video decoding apparatus 20 may obtain information about a coding unit that generates the minimum encoding error when encoding is recursively performed for each maximum coding unit, and may use the information to decode the current picture. In other words, encoded image data of coding units having a tree structure determined to be the optimum coding units in each maximum coding unit may be decoded.

Accordingly, even if image data has a high resolution and a excessively large amount of data, the image data may be efficiently decoded and restored according to a size of a coding unit and an encoding mode, which are adaptively determined according to characteristics of the image data, by using information about an optimum encoding mode received from an encoder.

A method for encoding and decoding a video based on a data unit such as a coding unit having a tree structure according to an embodiment of the present invention will now be described with reference to FIGS. 13 through 23.

FIG. 13 is a diagram for describing a concept of coding units according to an embodiment of the present invention.

A size of a coding unit may be expressed in width x height, and may be 64x64, 32x32, 16x16, and 8x8. A coding unit of 64x64 may be split into partitions of 64x64, 64x32, 32x64, or 32x32, and a coding unit of 32x32 may be split into partitions of 32x32, 32x16, 16x32, or 16x16, a coding unit of 16x16 may be split into partitions of 16x16, 16x8, 8x16, or 8x8, and a coding unit of 8x8 may be split into partitions of 8x8, 8x4, 4x8, or 4x4.

In video data 310, a resolution is 1920x1080, a maximum size of a coding unit is 64, and a maximum depth is 2. In video data 320, a resolution is 1920x1080, a maximum size of a coding unit is 64, and a maximum depth is 3. In video data 330, a resolution is 352x288, a maximum size of a coding unit is 16, and a maximum depth is 1. The maximum depth shown in FIG. 13 denotes a total number of splits from a maximum coding unit to a minimum decoding unit.

If a resolution is high or a data amount is large, a maximum size of a coding unit may be large so as to not only increase encoding efficiency but also to accurately reflect characteristics of an image. Accordingly, the maximum size of the coding unit of the video data 310 and 320 having the higher resolution than the video data 330 may be 64.

Since the maximum depth of the video data 310 is 2, coding units 315 of the vide data 310 may include a maximum coding unit having a long axis size of 64, and coding units having long axis sizes of 32 and 16 since depths are deepened to two layers by splitting the maximum coding unit twice. Meanwhile, since the maximum depth of the video data 330 is 1, coding units 335 of the video data 330 may include a maximum coding unit having a long axis size of 16, and coding units having a long axis size of 8 since depths are deepened to one layer by splitting the maximum coding unit once.

Since the maximum depth of the video data 320 is 3, coding units 325 of the video data 320 may include a maximum coding unit having a long axis size of 64, and coding units having long axis sizes of 32, 16, and 8 since the depths are deepened to 3 layers by splitting the maximum coding unit three times. As a depth deepens, detailed information may be precisely expressed.

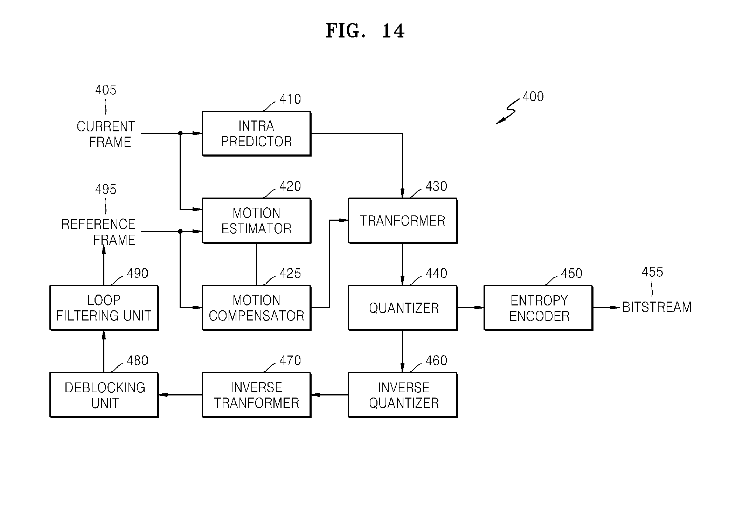

FIG. 14 is a block diagram of an image encoder 400 based on coding units, according to an embodiment of the present invention.

The image encoder 400 performs operations of the ALF coding unit 11 of the video encoding apparatus 10 to encode image data. In other words, an intra predictor 410 performs intra prediction on coding units in an intra mode, from among a current frame 405, and a motion estimator 420 and a motion compensator 425 performs inter estimation and motion compensation on coding units in an inter mode from among the current frame 405 by using the current frame 405, and a reference frame 495.

Data output from the intra predictor 410, the motion estimator 420, and the motion compensator 425 is output as a quantized transformation coefficient through a transformer 430 and a quantizer 440. The quantized transformation coefficient is restored as data in a spatial domain through an inverse quantizer 460 and an inverse transformer 470, and the restored data in the spatial domain is output as the reference frame 495 after being post-processed through a deblocking unit 480 and a loop filtering unit 490. The quantized transformation coefficient may be output as a bit stream 455 through an entropy encoder 450.

In order for the image encoder 400 to be applied in the video encoding apparatus 10, all elements of the image encoder 400, i.e., the intra predictor 410, the motion estimator 420, the motion compensator 425, the frequency transformer 430, the quantizer 440, the entropy encoder 450, the inverse quantizer 460, the inverse transformer 470, the deblocking unit 480, and the loop filtering unit 490 perform operations based on each coding unit from among coding units having a tree structure while considering the maximum depth of each maximum coding unit.

Specifically, the intra predictor 410, the motion estimator 420, and the motion compensator 425 determines partitions and a prediction mode of each coding unit from among the coding units having a tree structure while considering the maximum size and the maximum depth of a current maximum coding unit, and the frequency transformer 430 determines the size of the transformation unit in each coding unit from among the coding units having a tree structure.

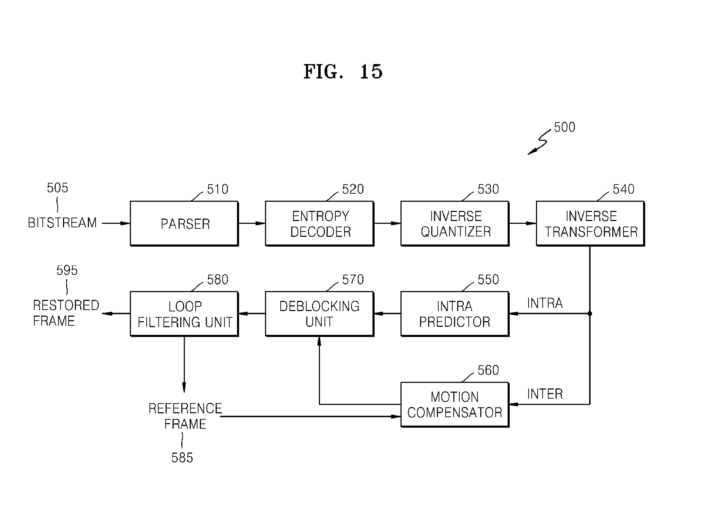

FIG. 15 is a block diagram of an image decoder 500 based on coding units, according to an embodiment of the present invention.

A parser 510 parses encoded image data to be decoded and information about encoding required for decoding from a bit stream 505. The encoded image data is output as inverse quantized data through an entropy decoder 520 and an inverse quantizer 530, and the inverse quantized data is restored to image data in a spatial domain through an inverse transformer 540.

An intra predictor 550 performs intra prediction on coding units in an intra mode with respect to the image data in the spatial domain, and a motion compensator 560 performs motion compensation on coding units in an inter mode by using a reference frame 585.

The image data in the spatial domain, which passed through the intra predictor 550 and the motion compensator 560, may be output as a restored frame 595 after being post-processed through a deblocking unit 570 and a loop filtering unit 580. Also, the image data that is post-processed through the deblocking unit 570 and the loop filtering unit 580 may be output as the reference frame 585.

In order to decode the image data in the ALF decoding unit 22 of the video decoding apparatus 20, the image decoder 500 may perform operations that are performed after the parser 510.

In order for the image decoder 500 to be applied in the video decoding apparatus 20, all elements of the image decoder 500, i.e., the parser 510, the entropy decoder 520, the inverse quantizer 530, the inverse frequency transformer 540, the intra predictor 550, the motion compensator 560, the deblocking unit 570, and the loop filtering unit 580 perform operations based on coding units having a tree structure for each maximum coding unit.

Specifically, the intra prediction 550 and the motion compensator 560 perform operations based on partitions and a prediction mode for each of the coding units having a tree structure, and the inverse frequency transformer 540 perform operations based on a size of a transformation unit for each coding unit.

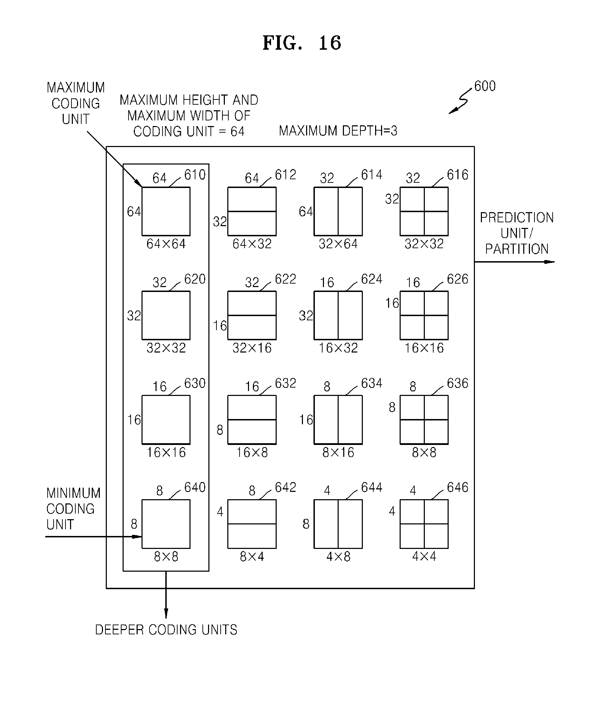

FIG. 16 is a diagram illustrating deeper coding units according to depths, and partitions, according to an embodiment of the present invention.

The video encoding apparatus 10 and the video decoding apparatus 20 use hierarchical coding units so as to consider characteristics of an image. A maximum height, a maximum width, and a maximum depth of coding units may be adaptively determined according to the characteristics of the image, or may be differently set by a user. Sizes of deeper coding units according to depths may be determined according to the predetermined maximum size of the coding unit.

In a hierarchical structure 600 of coding units, according to an embodiment of the present invention, the maximum height and the maximum width of the coding units are each 64, and the maximum depth is 3. The maximum depth denotes the total number of splitting times from the maximum coding unit to the minimum coding unit. Since a depth deepens along a vertical axis of the hierarchical structure 600, a height and a width of the deeper coding unit are each split. Also, a prediction unit and partitions, which are bases for prediction encoding of each deeper coding unit, are shown along a horizontal axis of the hierarchical structure 600.

In other words, a coding unit 610 is a maximum coding unit in the hierarchical structure 600, wherein a depth is 0 and a size, i.e., a height by width, is 64x64. The depth deepens along the vertical axis, and a coding unit 620 having a size of 32x32 and a depth of 1, a coding unit 630 having a size of 16x16 and a depth of 2, and a coding unit 640 having a size of 8x8 and a depth of 3 exist. The coding unit 650 having the size of 8x8 and the depth of 3 is a minimum coding unit.

The prediction unit and the partitions of a coding unit are arranged along the horizontal axis according to each depth. In other words, if the coding unit 610 having the size of 64x64 and the depth of 0 is a prediction unit, the prediction unit may be split into partitions included in the coding unit 610, i.e. a partition 610 having a size of 64x64, partitions 612 having the size of 64x32, partitions 614 having the size of 32x64, or partitions 616 having the size of 32x32.

Similarly, a prediction unit of the coding unit 620 having the size of 32x32 and the depth of 1 may be split into partitions included in the coding unit 620, i.e. a partition 620 having a size of 32x32, partitions 622 having a size of 32x16, partitions 624 having a size of 16x32, and partitions 626 having a size of 16x16.

Similarly, a prediction unit of the coding unit 630 having the size of 16x16 and the depth of 2 may be split into partitions included in the coding unit 630, i.e. a partition having a size of 16x16 included in the coding unit 630, partitions 632 having a size of 16x8, partitions 634 having a size of 8x16, and partitions 636 having a size of 8x8.

Similarly, a prediction unit of the coding unit 640 having the size of 8x8 and the depth of 3 may be split into partitions included in the coding unit 640, i.e. a partition having a size of 8x8 included in the coding unit 640, partitions 642 having a size of 8x4, partitions 644 having a size of 4x8, and partitions 646 having a size of 4x4.

In order to determine a coded depth of the coding units constituting the maximum coding unit 610, the ALF coding unit 11 of the video encoding apparatus 10 performs encoding for coding units corresponding to each depth included in the maximum coding unit 610.

A number of deeper coding units according to depths including data in the same range and the same size increases as the depth deepens. For example, four coding units corresponding to a depth of 2 are required to cover data that is included in one coding unit corresponding to a depth of 1. Accordingly, in order to compare encoding results of the same data according to depths, the coding unit corresponding to the depth of 1 and four coding units corresponding to the depth of 2 are each encoded.

In order to perform encoding for each depth, a representative encoding error which is a least encoding error for a current depth may be selected by performing encoding for each prediction unit in the coding units corresponding to the current depth, along the horizontal axis of the hierarchical structure 600. Alternatively, the minimum encoding error may be searched for by comparing the least encoding errors according to depths, by performing encoding for each depth as the depth deepens along the vertical axis of the hierarchical structure 600. A depth and a partition having the minimum encoding error in the coding unit 610 may be selected as the coded depth and a partition type of the coding unit 610.

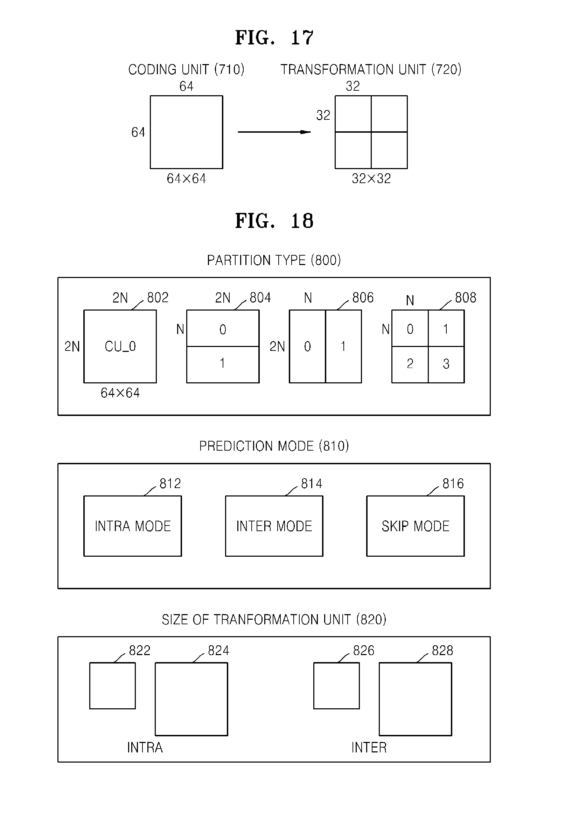

FIG. 17 is a diagram for describing a relationship between a coding unit 710 and a transformation unit 720, according to an embodiment of the present invention.

The video encoding apparatus 10 or the video decoding apparatus 20 according to an embodiment may encode or decode an image according to coding units having sizes smaller than or equal to a maximum coding unit for each maximum coding unit. Sizes of transformation units for transformation during encoding may be selected based on data units that are not larger than each coding unit.

For example, in the video encoding apparatus 10 or the video decoding apparatus 20, if a size of the coding unit 710 is 64x64, transformation may be performed by using the transformation unit 720 having a size of 32x32.

Also, data of the coding unit 710 having the size of 64x64 may be encoded by performing the transformation on each of the transformation units having the size of 32x32, 16x16, 8x8, and 4x4, which are smaller than 64x64, and then a transformation unit having the least coding error may be selected.

FIG. 18 is a diagram for describing encoding information of coding units corresponding to a coded depth, according to an embodiment of the present invention.

The output unit 12 of the video encoding apparatus 10 may encode and transmit information 800 about a partition type, information 810 about a prediction mode, and information 820 about a size of a transformation unit for each coding unit corresponding to a coded depth, as information about an encoding mode.

The information 800 indicates information about a shape of a partition obtained by splitting a prediction unit of a current coding unit, wherein the partition is a data unit for prediction encoding the current coding unit. For example, a current coding unit CU_0 having a size of 2Nx2N may be split into any one of a partition 802 having a size of 2Nx2N, a partition 804 having a size of 2NxN, a partition 806 having a size of Nx2N, and a partition 808 having a size of NxN. Here, the information 800 about a partition type is set to indicate one of the partition 804 having a size of 2NxN, the partition 806 having a size of Nx2N, and the partition 808 having a size of NxN

The information 810 indicates a prediction mode of each partition. For example, the information 810 may indicate a mode of prediction encoding performed on a partition indicated by the information 800, i.e., an intra mode 812, an inter mode 814, or a skip mode 816.

The information 820 indicates a transformation unit to be based on when transformation is performed on a current coding unit. For example, the transformation unit may be a first intra transformation unit 822, a second intra transformation unit 824, a first inter transformation unit 826, or a second intra transformation unit 828.

The receiving unit 21 of the video decoding apparatus 20 may extract and use the information 800, 810, and 820 for decoding.

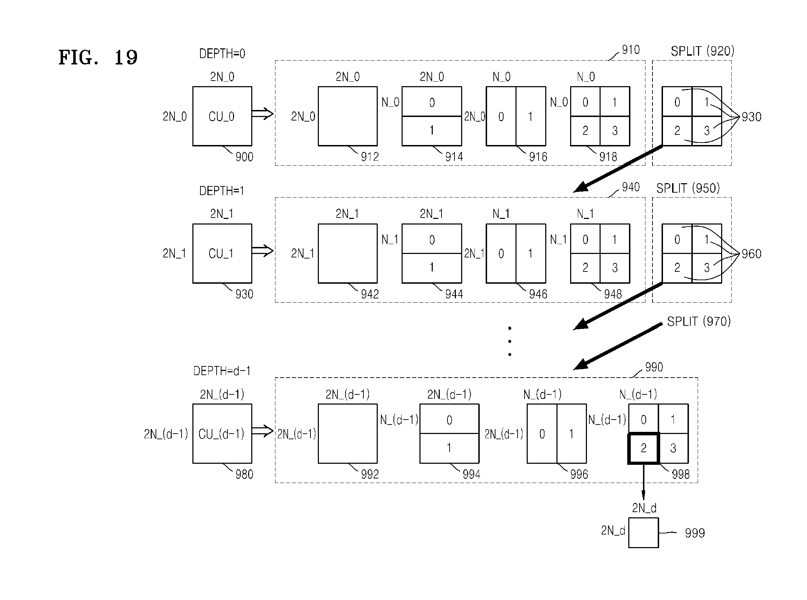

FIG. 19 is a diagram of deeper coding units according to depths, according to an embodiment of the present invention.

Split information may be used to indicate a change of a depth. The spilt information indicates whether a coding unit of a current depth is split into coding units of a lower depth.

A prediction unit 910 for prediction encoding a coding unit 900 having a depth of 0 and a size of 2N_0x2N_0 may include partitions of a partition type 912 having a size of 2N_0x2N_0, a partition type 914 having a size of 2N_0xN_0, a partition type 916 having a size of N_0x2N_0, and a partition type 918 having a size of N_0xN_0. FIG. 9 only illustrates the partition types 912, 914, 916, and 918 (918 is not shown in FIG. 19..) which are obtained by symmetrically splitting the prediction unit 910, but a partition type is not limited thereto, and the partitions of the prediction unit 910 may include asymmetrical partitions, partitions having a predetermined shape, and partitions having a geometrical shape.

Prediction encoding is repeatedly performed on one partition having a size of 2N_0x2N_0, two partitions having a size of 2N_0xN_0, two partitions having a size of N_0x2N_0, and four partitions having a size of N_0xN_0, according to each partition type. The prediction encoding in an intra mode and an inter mode may be performed on the partitions having the sizes of 2N_0x2N_0, N_0x2N_0, 2N_0xN_0, and N_0xN_0. The prediction encoding in a skip mode is performed only on the partition having the size of 2N_0x2N_0.

If an encoding error is smallest in one of the partition types 912, 914, and 916, the prediction unit 910 may not be split into a lower depth.

If the encoding error is the smallest in the partition type 918 having a size of N_0xN_0, a depth is changed from 0 to 1 to split the partition type 918 in operation 920, and encoding is repeatedly performed on coding units 930 having a depth of 2 and a size of N_0xN_0 to search for a minimum encoding error.

A prediction unit 940 for prediction encoding the coding unit 930 having a depth of 1 and a size of 2N_1x2N_1 (=N_0xN_0) may include partitions of a partition type 942 having a size of 2N_1x2N_1, a partition type 944 having a size of 2N_1xN_1, a partition type 946 having a size of N_1x2N_1, and a partition type 948 having a size of N_1xN_1.

If an encoding error is the smallest in the partition type 948, a depth is changed from 1 to 2 to split the partition type 948 in operation 950, and encoding is repeatedly performed on coding units 960, which have a depth of 2 and a size of N_2xN_2 to search for a minimum encoding error.

When a maximum depth is d-1, split operation according to each depth may be performed up to when a depth becomes d-1, and split information may be encoded as up to when a depth is one of 0 to d-2. In other words, when encoding is performed up to when the depth is d-1 after a coding unit corresponding to a depth of d-2 is split in operation 970, a prediction unit 990 for prediction encoding a coding unit 980 having a depth of d-1 and a size of 2N_(d-1)x2N_(d-1) may include partitions of a partition type 992 having a size of 2N_(d-1)x2N_(d-1), a partition type 994 having a size of 2N_(d-1)xN_(d-1), a partition type 996 having a size of N_(d-1)x2N_(d-1), and a partition type 998 having a size of N_(d-1)xN_(d-1).

Prediction encoding may be repeatedly performed on one partition having a size of 2N_(d-1)x2N_(d-1), two partitions having a size of 2N_(d-1)xN_(d-1), two partitions having a size of N_(d-1)x2N_(d-1), four partitions having a size of N_(d-1)xN_(d-1) from among the partition types 992 through 998 to search for a partition type having a minimum encoding error.

Even when the partition type 998 has the minimum encoding error, since a maximum depth is d-1, a coding unit CU_(d-1) having a depth of d-1 is no longer split to a lower depth, and a coded depth for the coding units constituting a current maximum coding unit 900 is determined to be d-1 and a partition type of the coding unit 900 may be determined to be N_(d-1)xN_(d-1). Also, since the maximum depth is d-1, split information for a coding unit 980 of the depth d-1 is not set.

A data unit 999 may be a 'minimum unit' for the current maximum coding unit. A minimum unit according to an embodiment of the present invention may be a rectangular data unit obtained by splitting a minimum coding unit by 4. By performing the encoding repeatedly, the video encoding apparatus 10 may select a depth having the least encoding error by comparing encoding errors according to depths of the coding unit 900 to determine a coded depth, and set a corresponding partition type and a prediction mode as an encoding mode of the coded depth.

As such, the minimum encoding errors according to depths are compared in all of the depths of 1 through d, and a depth having the least encoding error may be determined as a coded depth. The coded depth, the partition type of the prediction unit, and the prediction mode may be encoded and transmitted as information about an encoding mode. Also, since a coding unit is split from a depth of 0 to a coded depth, only split information of the coded depth is set to 0, and split information of depths excluding the coded depth is set to 1.

The receiving unit 21 of the video decoding apparatus 20 may extract and use the information about the coded depth and the prediction unit of the coding unit 900 to decode the partition type 912. The video decoding apparatus 20 may determine a depth, in which split information is 0, as a coded depth by using split information according to depths, and use information about an encoding mode of the corresponding depth for decoding.

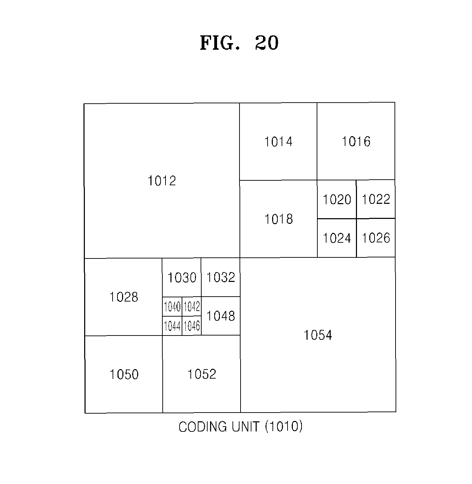

FIGS. 20 through 22 are diagrams for describing a relationship between coding units 1010, prediction units 1060, and transformation units 1070, according to an embodiment of the present invention.

The coding units 1010 are coding units corresponding to coded depths determined by the video encoding apparatus 10, in a maximum coding unit. The prediction units 1060 are partitions of prediction units of each of the coding units 1010, and the transformation units 1070 are transformation units of each of the coding units 1010.

When a depth of a maximum coding unit is 0 in the coding units 1010, depths of coding units 1012 and 1054 are 1, depths of coding units 1014, 1016, 1018, 1028, 1050, and 1052 are 2, depths of coding units 1020, 1022, 1024, 1026, 1030, 1032, and 1048 are 3, and depths of coding units 1040, 1042, 1044, and 1046 are 4.

In the prediction units 1060, some coding units 1014, 1016, 1022, 1032, 1048, 1050, 1052, and 1054 are split into partitions for prediction encoding. In other words, partition types in the coding units 1014, 1022, 1050, and 1054 have a size of 2NxN, partition types in the coding units 1016, 1048, and 1052 have a size of Nx2N, and a partition type of the coding unit 1032 has a size of NxN. Prediction units and partitions of the coding units 1010 are smaller than or equal to each coding unit.

Transformation or inverse transformation is performed on image data of the coding unit 1052 in the transformation units 1070 in a data unit that is smaller than the coding unit 1052. Also, the coding units 1014, 1016, 1022, 1032, 1048, 1050, and 1052 in the transformation units 1070 are different from those in the prediction units 1060 in terms of sizes and shapes. In other words, the video encoding apparatus 10 and the video decoding apparatus 20 may perform intra prediction, motion estimation, motion compensation, transformation, and inverse transformation individually on a data unit in the same coding unit.

Accordingly, encoding is recursively performed on each of coding units having a hierarchical structure in each region of a maximum coding unit to determine an optimum coding unit, and thus coding units having a recursive tree structure may be obtained. Encoding information may include split information about a coding unit, information about a partition type, information about a prediction mode, and information about a size of a transformation unit. Taple 1 shows the encoding information that may be set by the video encoding apparatus 10 and the video decoding apparatus 20.

Taple 1

| Split Information 0 (Encoding on Coding unit having Size of 2Nx2N and Current Depth of d) | | | Split Information 1 |
|---|---|---|---|
| Prediction Mode | Partition Type | Size of Transformation Unit | Repeatedly Encode |

(continued)

| Split Information 0 (Encoding on Coding unit having Size of 2Nx2N and Current Depth of d) | | | | | Split Information 1 |
|---|---|---|---|---|---|
| Intra Inter | Symmetrical Partition Type | Asymmetrical Partition Type | Split Information 0 of Transformation Unit | Split Information 1 of Transformation Unit | Coding Units having Lower Depth of d+1 |
| Skip (Only 2Nx2N) | 2Nx2N 2NxN Nx2N NxN | 2NxnU 2NxnD nLx2N nRx2N | 2Nx2N | NxN (Symmetrical Type) N/2xN/2 (Asymmetrical Type) | |

The output unit 12 of the video encoding apparatus 10 may output the encoding information about the coding units having a tree structure, and the receiving unit 21 of the video decoding apparatus 20 may extract the encoding information about the coding units having a tree structure from a received bit stream.

Split information indicates whether a current coding unit is split into coding units of a lower depth. If split information of a current depth d is 0, a depth, in which a current coding unit is no longer split into a lower depth, is a coded depth, and thus information about a partition type, prediction mode, and a size of a transformation unit may be defined for the coded depth. If the current coding unit is further split according to the split information, encoding is independently performed on four split coding units of a lower depth.

A prediction mode may be one of an intra mode, an inter mode, and a skip mode. The intra mode and the inter mode may be defined in all partition types, and the skip mode is defined only in a partition type having a size of 2Nx2N.

The information about the partition type may indicate symmetrical partition types having sizes of 2Nx2N, 2NxN, Nx2N, and NxN, which are obtained by symmetrically splitting a height or a width of a prediction unit, and asymmetrical partition types having sizes of 2NxnU, 2NxnD, nLx2N, and nRx2N, which are obtained by asymmetrically splitting the height or width of the prediction unit. The asymmetrical partition types having the sizes of 2NxnU and 2NxnD may be respectively obtained by splitting the height of the prediction unit in 1:3 and 3:1, and the asymmetrical partition types having the sizes of nLx2N and nRx2N may be respectively obtained by splitting the width of the prediction unit in 1:3 and 3:1

The size of the transformation unit may be set to be two types in the intra mode and two types in the inter mode. In other words, if split information of the transformation unit is 0, the size of the transformation unit may be 2Nx2N, which is the size of the current coding unit. If split information of the transformation unit is 1, the transformation units may be obtained by splitting the current coding unit. Also, if a partition type of the current coding unit having the size of 2Nx2N is a symmetrical partition type, a size of a transformation unit may be NxN, and if the partition type of the current coding unit is an asymmetrical partition type, the size of the transformation unit may be N/2xN/2.

The encoding information about coding units having a tree structure may include at least one of a coding unit corresponding to a coded depth, a prediction unit, and a minimum unit. The coding unit corresponding to the coded depth may include at least one of a prediction unit and a minimum unit containing the same encoding information.

Accordingly, it is determined whether adjacent data units are included in the same coding unit corresponding to the coded depth by comparing encoding information of the adjacent data units. Also, a corresponding coding unit corresponding to a coded depth is determined by using encoding information of a data unit, and thus a distribution of coded depths in a maximum coding unit may be determined.

Accordingly, if a current coding unit is predicted by referring to adjacent data units, encoding information of data units in deeper coding units adjacent to the current coding unit may be directly referred to and used.

Alternatively, if prediction encoding is performed on a current coding unit by referring to adjacent coding units, the data units adjacent to the current coding unit are searched using encoded information of the data units, and the searched adjacent coding units may be referred to for predicting the current coding unit.

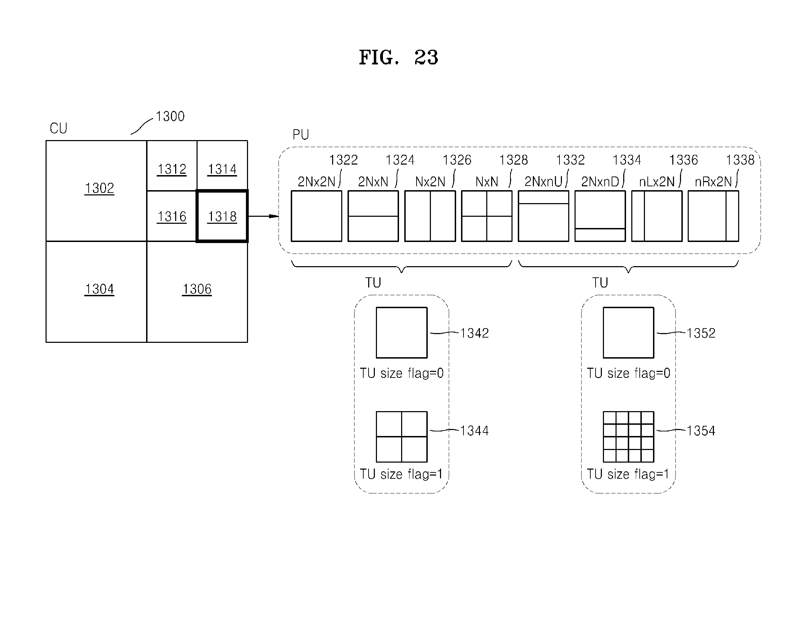

FIG. 23 is a diagram for describing a relationship between a coding unit, a prediction unit, and a transformation unit, according to encoding mode information of Table 1.

A maximum coding unit 1300 includes coding units 1302, 1304, 1306, 1312, 1314, 1316, and 1318 of coded depths. Here, since the coding unit 1318 is a coding unit of a coded depth, split information may be set to 0. Information about a partition type of the coding unit 1318 having a size of 2Nx2N may be set to be one of a partition type 1322 having a size of 2Nx2N, a partition type 1324 having a size of 2NxN, a partition type 1326 having a size of Nx2N, a partition type 1328 having a size of NxN, a partition type 1332 having a size of 2NxnU, a partition type 1334 having a size of 2NxnD, a partition type 1336 having a size of nLx2N, and a partition type 1338 having a size of nRx2N.

A transformation unit split information (TU size flag) is a type of transformation index; a size of a transformation unit corresponding to a transformation index may be modified according to a prediction unit type or a partition type of a coding unit.

When the partition type is set to be symmetrical, i.e. the partition type 1322 (2Nx2N), 1324 (2NxN), or 1328 (NxN), a transformation unit 1342 having a size of 2Nx2N is set if split information (TU size flag) of a transformation unit is 0, and a transformation unit 1344 having a size of NxN is set if split information (TU size flag) of a transformation unit is 1.

When the partition type is set to be asymmetrical, i.e., the partition type 1332 (2NxnU), 1334 (2NxnD), 1336 (nLx2N), or 1338 (nRx2N), a transformation unit 1352 having a size of 2Nx2N is set if a TU size flag is 0, and a transformation unit 1354 having a size of N/2xN/2 is set if a TU size flag is 1.

Referring to FIG. 23, the TU size flag is a flag having a value or 0 or 1, but the TU size flag is not limited to 1 bit, and a transformation unit may be hierarchically split having a tree structure while the TU size flag increases from 0. The transformation unit split information (TU size flag) may be used as an example of a transformation index.

In this case, when a maxium size of a transformation unit for transformation unit split information according to an embodiment is used with a minimum size of the transformation unit, the size of the actually used transformation unit may be represented. The video encoding apparatus 10 may encode maximum transformation unit size information, minimum transformation unit size information, and maxium transformation unit split information. The encoded, maximum transformation unit size information, the minimum transformation unit size information, and the maxium transformation unit split information may be inserted into a SPS. The video decoding apparatus 20 may use the maximum transformation unit size information, the minimum transformation unit size information, and the maxium transformation unit split information for video decoding.

For example, (a) if a size of a current encoding unit is 64x64, and a maximum transformation unit is 32x32, (a-1) a size of a transformation unit is 32x32 when transformation unit split information is 0; (a-2) a size of a transformation unit is 16x16 when transformation unit split information is 1; and (a-3) a size of a transformation unit is 8x8 when transformation unit split information is 2.

Alternatively, (b) if a size of a current encoding unit is 32x32, and a minimum transformation unit is 32x32, (b-1) a size of a transformation unit is 32x32 when transformation unit split information is 0, and since the size of a transformation unit cannot be smaller than 32x32, no more transformation unit split information may be set.

Alternatively, (c) if a size of a current encoding unit is 64x64, and maximum transformation unit split information is 1, transformation unit split information may be 0 or 1, and no other transformation split information may be set.

Accordingly, when defining a transformation unit as 'RootTuSize' when the maximum transformation unit split information is 'MaxTransformSizeIndex', a size of the minimum transformation unit is 'MinTransformSize', and transformation unit split information is 0, a size of a minimum transformation unit 'CurrMinTuSize' which is available in a current coding unit may be defined by Equation (1) below.

$$\text{CurrMinTuSize}$$

$$= \max (\text{MinTransformSize}, \text{RootTuSize}/(2^{\wedge}\text{MaxTransformSizeIndex})) \ldots (1)$$

In comparison with the size of the minimum transformation unit 'CurrMinTuSize' that is available in the current coding unit, the transformation unit size 'RootTuSize' which is a size of a transformation unit when transformation unit split information is 0 may indicate a maximum transformation unit which may be selected in regard to a system. That is, according to Equation (1), 'RootTuSize/(2^MaxTransformSizeIndex)' corresponds to a size of a transformation unit that is obtained by splitting 'RootTuSize,' which is a size of a transformation unit when transformation unit split information is 0, by the number of splitting times corresponding to the maximum transformation unit split information, and 'MinTransformSize' is a size of a minimum transformation unit, and thus a smaller value of these may be 'CurrMinTuSize' which is the size of the minimum transformation unit that is available in the current coding unit.

The size of the maximum transformation unit 'RootTuSize' according to an embodiment may be varied according to a prediction mode.

For example, if a current prediction mode is an inter mode, RootTuSize may be determined according to Equation (2) below. In Equation (2), 'MaxTransformSize' refers to a size of a maximum transformation unit, and 'PUSize' refers to a size of a current prediction unit.

$$\text{RootTuSize} = \min(\text{MaxTransformSize}, \text{PUSize}) \ldots\ldots\ldots (2)$$

In other words, if a current prediction mode is an inter mode, the size of the transformation unit size 'RootTuSize' when transformation unit split information 0 may be set to a smaller value from among the size of the maximum transformation unit and the size of the current prediction unit.

If a prediction mode of a current partition unit is an intra mode, 'RootTuSize' may be determined according to Equation (3) below. 'PartitionSize' refers to a size of a current partition unit.

$$RootTuSize = min(MaxTransformSize, PartitionSize) \dots\dots\dots(3)$$

In other words, if a current prediction mode is an intra mode, the size of the transformation unit 'RootTuSize' when transformation unit split information is 0 may be set by a smaller value from among the size of the maximum transformation unit and the size of the current partition unit.

However, it should be noted that 'RootTuSize' which is the current maximum transformation unit size according to an embodiment and is varied according to a prediction mode of a partition unit is an example, and that factors for determining the size of the current maximum transformation unit size are not limited thereto.

Accordingly, as a loop filtering area or a loop filter is determined in consideration of a minimum distance between a pixel in a coding unit and a border of the pixel, and a filter length of a loop filter for loop filtering performed based on coding units according to an embodiment, an operation delay or an operation load for importing data necessary for loop filtering may be minimized.

Morever, loop filtering may be set such that deblocking filtering and loop filtering are not repeatedly performed for a current coding unit so that repeated operation may be minimized. In addition, even for an external pixel of a current coding unit, in order that loop filtering may be performed using pixels that are already imported and easily accessible, a loop filtering area or a filter vertical length of a loop filter may be extended to thereby expand pixels to be used for loop filtering. If pixels used for loop filtering are increased, encoding error may be further reduced by the loop filtering.

Accordingly, an increase in an operation delay or an operation load caused by loop filtering based on a coding unit may be minimized, and loop filtering may be performed using as many pixels as possible, and thus loop filtering may be performed effectively.

The block diagrams disclosed in the present invention may be construed by a person of ordinary skill in the art that it is a form conceptually expressing circuits for implementing the principles of the present invention. Similarly, it is obvious to a person of ordinary skill in the art that a flowchart, a status transition view, a pseudo-code, or the like, may be substantially expressed in a computer-readable medium to denote various processes which can be executed by a computer or a processor whether or not the computer or the processor is clarified or not. Thus, the foregoing embodiments of the present invention may be created as programs which can be executed by computers and may be implemented in a general digital computer operating the programs by using a computer-readable recording medium. The computer-readable medium may include storage mediums such as a magnetic storage medium (e.g., a ROM, a floppy disk, a hard disk, or the like), an optical reading medium (e.g., a CD-ROM, a DVD, or the like).

Functions of various elements illustrated in the drawings may be provided by the use of dedicated hardware as well as by hardware which is related to appropriate software and can execute the software. When provided by a processor, such functions may be provided by a single dedicated processor, a single shared processor, or a plurality of individual processors which can share some of the functions. Also, the stated use of terms "processor" or "controller" should not be construed to exclusively designate hardware which can execute software and may tacitly include digital signal processor (DSP) hardware, a ROM for storing software, a RAM, and a non-volatile storage device, without any limitation.

In the claims of the present invention, elements expressed as units for performing particular functions may cover a certain method performing a particular function, and such elements may include a combination of circuit elements performing particular functions, or software in a certain form including firmware, microcodes, or the like, combined with appropriate circuits to perform software for performing particular functions.

Designation of 'an embodiment' of the principles of the present invention and various modifications of such an expression may mean that particular features, structures, characteristics, and the like, in relation to this embodiment are included in at least one embodiment of the principle of the present invention. Thus, the expression 'an embodiment' and any other modifications disclosed throughout the entirety of the disclosure of the present invention may not necessarily designate the same embodiment.

In the specification, in a case of 'at least one of A and B', the expression of 'at least one among ~' is used to cover only a selection of a first option (A), only a selection of a second option (B), or a selection of both options (A and B). In another example, in a case of 'at least one of A, B, and C', the expression of 'at least one among ~' is used to cover only a selection of a first option (A), only a selection of a second option (B), only a selection of a third option (C), only a selection of the first and second options (A and B), only a selection of the second and third options (B and C), or a selection of all of the three options (A, B, and C). Even when more items are enumerated, it will be obvious to a person of ordinary skill in the art that they can be definitely extendedly construed.

While the present invention has been particularly shown and described with reference to exemplary embodiments thereof, it will be understood by one of ordinary skill in the art that various changes in form and details may be made therein without departing from the spirit and scope of the invention as defined by the following claims. The exemplary embodiments should be considered in a descriptive sense only and not for purposes of limitation. Therefore, the scope of the invention is defined not by the detailed description of the invention but by the following claims, and all differences within the scope will be construed as being included in the present invention.

**Claims**

1. A method of decoding a video by using a video decoding processor, the method comprising:

   extracting encoding information and encoded video data by receiving and parsing a bit stream of a video;
   decoding the encoded video data for each coding unit which is a data unit for decoding the video data, by using the encoding information;
   performing loop filtering on the coding unit with respect to the decoded video data by using internal pixels of the coding unit based on a minimum distance between a pixel on which loop filtering is to be performed and a border of the coding unit; and
   restoring the video by combining the decoded video data and data on which the loop filtering is performed, for each coding unit.

2. The method of claim 1, wherein the performing of loop filtering comprises:

   modifying a loop filtering method based on a minimum distance between the pixel and a border of the coding unit, and a filter length of the loop filter; and
   performing loop filtering on the coding unit based on the modified loop filtering method,
   wherein the loop filtering method comprises at least one of a first method of determining a loop filtering area including central pixels of loop filtering within an internal area away from at least one border of the coding unit a predetermined distance and a second method of determining the loop filter such that a filter length of the loop filter is equal to or smaller than the minimum distance between the pixel and the border of the coding unit, and
   wherein the predetermined distance between at least one border of the coding unit and the internal area is equal to or greater than the filter length.

3. The method of claim 2, wherein the performing of loop filtering comprises determining the loop filtering method based on a minimum vertical distance between upper and lower borders from among borders of the coding unit and a filter vertical length for vertical filtering of the loop filter,
   wherein the fitler vertical length is determined to be shorter than a filter horizontal length for horizontal filtering of the loop filtering.

4. The method of claim 2, wherein the performing of loop filtering comprising determining the loop filtering area in an area except an area of the coding unit whose data is modified by deblocking filtering.

5. The method of claim 2, wherein the performing of loop filtering further comprises extending at least one of the determined loop filtering area and the filter vertical length of the loop filter based on a filter vertical length of the deblocking filter of the coding unit.

6. The method of claim 1, wherein the coding unit is included in coding units having a tree structure included in a maximum coding unit, and
   the coding units having a tree structure are coding units of a coded depth which are hierarchically determined according to depths in the same region of the maximum coding unit and independently determined in different regions, and
   wherein the coding units of the coded depth are determined to independently output encoding results for each coding unit according to depths, from among coding units according to depths that are configured hierarchically according to depths indicating the number of splitting times of the maximum coding unit.

7. A method of encoding a video by using a video encoding processor, the method comprising:

   encoding the video data based on a coding unit obtained by splitting a video data into spatial domains;

performing loop filtering on the coding unit by using internal pixels of the coding unit based on a minimum distance between a pixel, on which loop filtering is to be performed, from among video data of the coding unit, and a border of the coding unit, and a filter length of the loop filter; and

outputting encoding information related to an encoding method based on the coding unit and the encoded video data for each of the coding units.

8. The method of claim 7, wherein the performing of loop filtering comprises:

modifying the loop filtering method based on a minimum distance between the pixel and a border of the coding unit and a filter length of the loop filter; and

performing loop filtering on the coding unit based on the modified loop filtering method, wherein the loop filtering method comprises at least one of a first method of determining a loop filtering area including central pixels for loop filtering within an internal area that is away from at least one border of the coding unit a predetermined distance and a second method of determining the loop filter such that a filter length of the loop filter is equal to or smaller than the minimum distance between the pixel and the border of the coding unit, and wherein the predetermined distance between the at least one border of the coding unit and the internal area is equal to or greater than the filter vertical length.

9. The method of claim 8, wherein the performing of loop filtering comprises determining the loop filtering method based on a minimum vertical distance between upper and lower borders from among borders of the coding unit and a filter vertical length for vertical filtering of the loop filter, wherein the fitler vertical length is determined to be shorter than a filter horizontal length for horizontal filtering of the loop filtering.

10. The method of claim 8, wherein the performing of loop filtering comprises determining the loop filtering area in an area of the coding unit except an area whose data is modified by deblocking filtering; and

extending at least one of the determined loop filtering area and the filter vertical length of the determined loop filter based on a filter vertical length of the deblocking filter of the coding unit.

11. The method of claim 7, wherein the encoding of a video comprises:

splitting a picture into a maximum coding unit a data unit of the largest size for encoding the picture; and determining coding units having a tree structure which are hierarchically determined according to depths in the same region of the maximum coding unit and independently in different regions, from among coding units according to depths that are configured hierarchically according to depths indicating the number of spatial splitting times of the maximum coding unit by independently determining a coding unit of a coded depth at which an encoding result is to be output for each coding unit according to depths, wherein in the performing of loop filtering, loop filtering is performed on a coding unit included in each of the encoding untis having a tree structure.

12. A video decoding apparatus in connection with a video decoding processor, comprising:

a receiving unit to receive and parse a bit stream of a video so as to extract encoding information and encoded video data;

an adaptive loop filter (ALF) coding unit to decode the encoded video data for each coding unit which is a data unit for decoding the video data by using the encoding information, and to perform loop filtering on the coding unit by using internal pixel values of the coding unit based on a minimum distance between a pixel on which loop filtering is to be performed and a border of the coding unit, and a filter length of the loop filter; and

a restoring unit to restore the video by combining the decoded video data and the data on which loop filtering is performed, for each of the coding units.

13. A video encoding apparatus in connection with a video encoding processor, comprising:

an ALF coding unit to perform loop filtering on the coding unit by using internal pixel values of the coding unit based on a minimum distance between a pixel on which loop filtering is to be performed and a border of the coding unit, and a filter length of the loop filter, based on a coding unit that is obtained by splitting video data into spatial domains, and to encode the video data for each of the coding units; and

an output unit to output encoding information related to an encoding method based on the coding unit and the encoded video data for each of the coding units.

**14.** A computer readable recording medium having recorded thereon a program for executing the method of claim 1.

**15.** A computer readable recording medium having recorded thereon a program for executing the method of claim 7.

## FIG. 1

## FIG. 2

## FIG. 3

## FIG. 4

## FIG. 5

## FIG. 6

FIG. 7

```
                    ┌─────────────────────────┐
                    │   START CU FILTERING     │
                    └─────────────────────────┘
                                 │
                                 ▼
                              ╱──────╲      S71
            "1"          ╱─────────────────╲    "0"
        ┌─────────────┤      ALF Flag       ├─────────────┐
        │             ╲─────────────────────╱             │
        │                       ╲──────╱                  │
        ▼         S72                                     ▼          S74
┌─────────────────────┐                      ┌─────────────────────────┐
│ DEBLOCKING FILTERING │                      │  DEBLOCKING FILTERING ON │
│ ONLY ON BORDER OF CU │                      │ BORDERS OF CU, PU, AND TU│
└─────────────────────┘                      └─────────────────────────┘
        │         S73                                     │
        ▼                                                 │
┌─────────────────────┐                                  │
│    LOOP FILTERING    │                                  │
└─────────────────────┘                                  │
        │                                                 │
        └────────────────────┬────────────────────────────┘
                             ▼
                        ┌─────────┐
                        │   END   │
                        └─────────┘
```

# FIG. 8

64

64

81

CU SIZE = 64X64
MINIMUM DEBLOCKING UNIT: 16X16

PERFORM DEBLOCKING
FILTERING ONLY ON
BORDER OF CU

S72 : DEBLOCKING FILTERING

81

82

83

6

9

56

56

64

64

SIZE OF LOOP FILTERING AREA:
56X56
→ PERFORM 9X9 2D FILTERING

S73 : LOOP FILTERING

64

64

81

PERFORM DEBLOCKING
FILTERING ON BORDERS OF
CU, PU, AND TU

S74 : DEBLOCKING FILTERING

FIG. 9

FIG. 10

FIG. 11

START

ENCODE VIDEO DATA BASED ON CODING UNIT ── 111

PERFORM LOOP FILTERING ON CODING UNIT BASED ON
DISTANCE BETWEEN PIXEL AND BORDER OF CODING UNIT,
AND LOOP FILTERING LENGTH, BY USING INTERNAL
PIXEL VALUES OF CODING UNIT ── 112

OUTPUT ENCODING INFORMATION AND ENCODED
VIDEO DATA FOR EACH CODING UNIT ── 113

END

## FIG. 12

START

RECEIVE AND PARSE BIT STREAM OF
VIDEO TO EXTRACT ENCODED VIDEO DATA
AND ENCODING INFORMATION — 121

DECODE ENCODED VIDEO DATA FOR
EACH CODING UNIT — 122

PERFORM LOOP FILTERING ON CODING UNIT
BASED ON DISTANCE BETWEEN PIXEL AND
BORDER OF CODING UNIT AND LOOP FILTERING — 123
LENGTH, BY USING INTERNAL PIXEL VALUES
OF CODING UNIT

RESTORE VIDEO FOR EACH CODING UNIT — 124

END

# FIG. 13

RESOLUTION:1920×1080
MAXIMUM SIZE OF
CODING UNIT:64
MAXIMUM DEPTH=2

315

— 310

RESOLUTION:1920×1080
MAXIMUM SIZE OF
CODING UNIT:64
MAXIMUM DEPTH=3

— 320

RESOLUTION:352×288
MAXIMUM SIZE OF
CODING UNIT:16
MAXIMUM DEPTH=1

— 330

335  325

64  64×64
64  64×32
32  32×64
32  32×32

32  32×32
32  32×16
16  16×32
16  16×16

16  16×16
16  16×8
8  8×16
8  8×8

8  8×8
8  8×4
4  4×8
4  4×4

**FIG. 14**

400

405 CURRENT FRAME

410 INTRA PREDICTOR

420 MOTION ESTIMATOR

425 MOTION COMPENSATOR

495 REFERENCE FRAME

430 TRANFORMER

440 QUANTIZER

450 ENTROPY ENCODER

455 BITSTREAM

460 INVERSE QUANTIZER

470 INVERSE TRANFORMER

480 DEBLOCKING UNIT

490 LOOP FILTERING UNIT

## FIG. 15

BITSTREAM → **PARSER** (510) → **ENTROPY DECODER** (520) → **INVERSE QUANTIZER** (530) → **INVERSE TRANSFORMER** (540)

505 (BITSTREAM)

500

**INTRA PREDICTOR** (550) → **DEBLOCKING UNIT** (570) → **LOOP FILTERING UNIT** (580) → RESTORED FRAME (595)

INTRA

**MOTION COMPENSATOR** (560)

INTER

REFERENCE FRAME (585)

EP 2 592 831 A2

# FIG. 16

MAXIMUM CODING UNIT

MAXIMUM HEIGHT AND MAXIMUM WIDTH OF CODING UNIT = 64    MAXIMUM DEPTH=3

600

64 ⌐610    64 ⌐612    32 ⌐614    32 ⌐616

64  64×64    32  64×32    64  32×64    32  32×32    PREDICTION UNIT/ PARTITION

32 ⌐620    32 ⌐622    16 ⌐624    16 ⌐626

32  32×32    16  32×16    32  16×32    16  16×16

16 ⌐630    16 ⌐632    8 ⌐634    8 ⌐636

16  16×16    8  16×8    16  8×16    8  8×8

MINIMUM CODING UNIT

8 ⌐640    8 ⌐642    4 ⌐644    4 ⌐646

8  8×8    4  8×4    8  4×8    4  4×4

DEEPER CODING UNITS

**FIG. 17**

CODING UNIT (710)          TRANSFORMATION UNIT (720)

64

64                    64×64

32

32

32×32

**FIG. 18**

PARTITION TYPE (800)

2N    802      2N    804      N    806      N    808

2N    CU_0         N    0       2N   0 | 1     N   0 | 1

64×64                    1                        2 | 3

PREDICTION MODE (810)

812              814              816

INTRA MODE       INTER MODE       SKIP MODE

SIZE OF TRANFORMATION UNIT (820)

822    824              826    828

INTRA                  INTER

41

FIG. 19

FIG. 20

CODING UNIT (1010)

FIG. 21

# FIG. 22

TRANSFORMATION UNIT (1070)

FIG. 23

CU

1300

1302

1312 1314

1316 1318

1304 1306

PU

1322 1324 1326 1328 1332 1334 1336 1338

2Nx2N 2NxN Nx2N NxN 2NxnU 2NxnD nLx2N nRx2N

TU

TU size flag=0 — 1342

TU size flag=1 — 1344

TU

TU size flag=0 — 1352

TU size flag=1 — 1354

EP 2 592 831 A2